(19) Europäisches Patentamt
European Patent Office
Office européen des brevets

(11) **EP 4 598 126 A1**

(12) **EUROPEAN PATENT APPLICATION**
published in accordance with Art. 153(4) EPC

(43) Date of publication:
06.08.2025 Bulletin 2025/32

(21) Application number: 23873116.0

(22) Date of filing: 26.09.2023

(51) International Patent Classification (IPC):
H04W 36/06 (2009.01)    H04W 36/00 (2009.01)
H04W 72/23 (2023.01)    H04W 76/27 (2018.01)
H04W 76/28 (2018.01)

(52) Cooperative Patent Classification (CPC):
H04W 36/00; H04W 36/06; H04W 72/23;
H04W 76/27; H04W 76/28; Y02D 30/70

(86) International application number:
PCT/KR2023/014834

(87) International publication number:
WO 2024/072002 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022 KR 20220124742

(71) Applicant: LG Electronics Inc.
Yeongdeungpo-gu
Seoul 07336 (KR)

(72) Inventors:
• MYUNG, Sechang
Seoul 06772 (KR)
• KIM, Seonwook
Seoul 06772 (KR)
• LEE, Youngdae
Seoul 06772 (KR)
• YANG, Suckchel
Seoul 06772 (KR)
• HWANG, Seunggye
Seoul 06772 (KR)

(74) Representative: Frenkel, Matthias Alexander
Wuesthoff & Wuesthoff
Patentanwälte und Rechtsanwalt PartG mbB
Schweigerstraße 2
81541 München (DE)

(54) **DEVICE AND METHOD FOR CHANGING PRIMARY CELL IN WIRELESS COMMUNICATION SYSTEM**

(57) The present disclosure relates to an apparatus and method for changing a primary cell (PCell) in a wireless communication system, and a method for operating a terminal may include performing a random access procedure with a base station, configuring a first cell as a PCell among cells of the base station, configuring a second cell as a secondary cell (SCell) among the cells of the base station, receiving an indication to change the PCell to the second cell, and based on the second cell being in inactive state or an active bandwidth part (BWP) of the terminal being dormant in the second cell, changing the PCell to a third cell different from the second cell or changing the PCell to the second cell after switching the active BWP.

BASE STATION (2020)                    TERMINAL (2010)

INDICATION RELATED TO
PCELL CHANGE(S2001)

S2003 — CHANGE PCELL

**FIG. 20**

**Description**

Technical Field

The present disclosure relates to a wireless communication system, and more particularly, to an apparatus and method for changing a primary cell (PCell) in a wireless communication system.

Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

Disclosure

Technical Problem

The present disclosure may provide an apparatus and method for dynamically changing a primary cell (PCell) in a wireless communication system.

The present disclosure may provide an apparatus and method for indicating a PCell change in a wireless communication system.

The present disclosure may provide an apparatus and method for signaling PCell change-related information in a wireless communication system.

The present disclosure may provide an apparatus and method for changing PCell from a first cell to a second cell based on a PCell change indication in a wireless communication system.

The present disclosure may provide an apparatus and method for transferring at least some functions of a PCell from a first cell to a second cell in a wireless communication system.

The present disclosure may provide an apparatus and method for performing a PCell change procedure based on a state of a PCell change target cell in a wireless communication system.

The present disclosure may provide an apparatus and method for changing a bandwidth part (BWP) of a PCell change target cell in a wireless communication system.

The present disclosure may provide an apparatus and method for preventing inactivation of a PCell change target cell in a wireless communication system.

The present disclosure may provide an apparatus and method for changing a DRX group configuration based on a PCell change in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

Technical Solution

As an example of the present disclosure, a method for operating a terminal in a wireless communication system may include performing a random access procedure with a base station, configuring a first cell as a primary cell (PCell) among cells of the base station, configuring a second cell as a secondary cell (SCell) among the cells of the base station, receiving an indication to change the PCell to the second cell, and based on the second cell being in inactive state and based on the second cell being in inactive state or an active bandwidth part (BWP) of the terminal being dormant in the second cell, changing the PCell to a third cell different from the second cell or changing the PCell to the second cell after switching the active BWP.

As an example of the present disclosure, a method for operating a base station in a wireless communication system may include performing a random access procedure with a terminal, configuring a first cell as a primary cell (PCell) of the terminal among cells of the base station, configuring a second cell as a secondary cell (SCell) of the terminal among the cells of the base station, and transmitting an indication to change the PCell to the second cell to the terminal.

As an example of the present disclosure, a terminal in a wireless communication system may include a transceiver and a processor coupled with the transceiver, and the processor may be configured to perform a random access procedure with a base station, to configure a first cell as a primary cell (PCell) among cells of the base station, to configure a second cell as a secondary cell (SCell) among the cells of the base station, to receive an indication to change the PCell to the second cell, and based on the second cell being in inactive state and based on the second cell being in inactive state or an active bandwidth part (BWP) of the terminal being dormant in the second cell, to change the PCell to a third cell different from the second cell or to change the PCell to the second cell after switching the active BWP.

As an example of the present disclosure, a base station in a wireless communication system may include a transceiver and a processor coupled with the transceiver, and the processor may be configured to perform a random access procedure with a terminal, to configure a first cell as a primary cell (PCell) of the terminal among cells of the base station, to configure a second cell as a secondary cell (SCell) of the terminal among the cells of the base station, and to transmit an indication to change the PCell to the second cell to the terminal.

As an example of the present disclosure, a communication device may include at least one processor and at least one computer memory coupled with the at least one processor and storing an instruction that instructs operations when executed by the at least one processor, and the operations may include performing a random access procedure with a base station, configuring a first cell as a primary cell (PCell) among cells of the base station, configuring a second cell as a secondary cell (SCell) among the cells of the base station, receiving an indication to change the PCell to the second cell, and based on the second cell being in inactive state or an active bandwidth part (BWP) of the terminal being dormant in the second cell, changing the PCell to a third cell different from the second cell or changing the PCell to the second cell after switching the active BWP.

As an example of the present disclosure, a non-transitory computer-readable medium storing at least one instruction may include the at least one instruction that is executable by a processor, and the at least one instruction may control a device to perform a random access procedure with a base station, to configure a first cell as a primary cell (PCell) among cells of the base station, to configure a second cell as a secondary cell (SCell) among the cells of the base station, to receive an indication to change the PCell to the second cell, and based on the second cell being in inactive state or an active bandwidth part (BWP) of the terminal being dormant in the second cell, to change the PCell to a third cell different from the second cell or to change the PCell to the second cell after switching the active BWP.

The above-described aspects of the present disclosure are merely a part of exemplary embodiments of the present disclosure, and various embodiments reflecting technical features of the present disclosure may be derived and understood by those skilled in the art based on the detailed description of the present disclosure below.

Advantageous Effects

As is apparent from the above description, the embodiments of the present disclosure have the following effects.

According to the present disclosure, energy consumption of a base station can be reduced.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

Description of Drawings

FIG. 1 illustrates an example of a structure of a wireless communication system to which the present disclosure may be applied.

FIG. 2 illustrates an example of a wireless device applicable to the present disclosure.

FIG. 3 illustrates a frame structure in a wireless communication system to which the present disclosure may be applied.

FIG. 4 illustrates an example of a resource grid in a wireless communication system to which the present disclosure may be applied.

FIG. 5 illustrates an example of a physical resource block in a wireless communication system to which the present disclosure may be applied.

FIG. 6 illustrates an example of a slot structure in a wireless communication system to which the present disclosure may be applied.

FIG. 7 illustrates examples of physical channels used in a wireless communication system, to which the present disclosure may be applied, and an example of a general signal transmission and reception method using the physical channels.

FIG. 8 illustrates an example of mapping a physical channel within a slot in a wireless communication system to which the present disclosure is applicable.

FIG. 9 illustrates the structure of an SSB (synchronization signal and broadcast channel block) applicable to the present disclosure.

FIG. 10 illustrates transmission of an SSB applicable to the present disclosure.

FIG. 11 illustrates examples of SSB candidate positions applicable to the present disclosure.

FIG. 12 illustrates an example of downlink time synchronization information applicable to the present disclosure.

FIG. 13 illustrates an example of a procedure of obtaining system information that is applicable to the present disclosure.

FIG. 14 illustrates an example of multi-beam transmission that is applicable to the present disclosure.

FIG. 15 illustrates an example of indication of an actually transmitted SSB that is applicable to the present disclosure.

FIG. 16 illustrates an example of a contention-based random access procedure that is applicable to the present disclosure.

FIG. 17 illustrates an example of a non-contention-based random access procedure that is applicable to the present disclosure.

FIG. 18 illustrates an example of a network initial access and communication procedure that is applicable to the present disclosure.

FIG. 19 illustrates an example of a DRX cycle that is applicable to the present disclosure.

FIG. 20 illustrates an example of a PCell change indication procedure in a wireless communication system according to an embodiment of the present disclosure.

FIG. 21 illustrates an example of a procedure of changing a PCell in a wireless communication system according to an embodiment of the present disclosure.

FIG. 22 illustrates an example of a procedure of transferring at least some functions of a PCell in a wireless communication system according to an embodiment of the present disclosure.

FIG. 23 illustrates an example of a procedure of changing a PCell based on a state of a target cell in a wireless communication system according to an embodiment of the present disclosure.

FIG. 24 illustrates an example of a procedure of preventing inactivation of a PCell change target cell in a wireless communication system according to an embodiment of the present disclosure.

FIG. 25 illustrates an example of a procedure of changing a PCell in a wireless communication system according to an embodiment of the present disclosure.

Mode for Invention

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. ABS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial intelligence/machine learning (AI/ML), but may not be limited thereto.

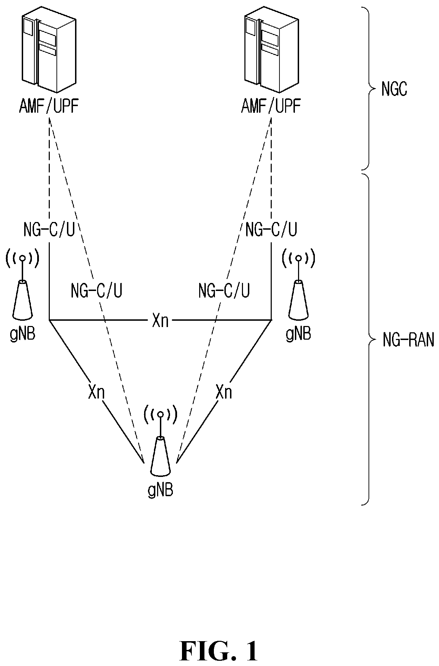

FIG. 1 exemplifies a structure of a wireless communication system to which the present disclosure may be applied. Referring to FIG. 1, NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

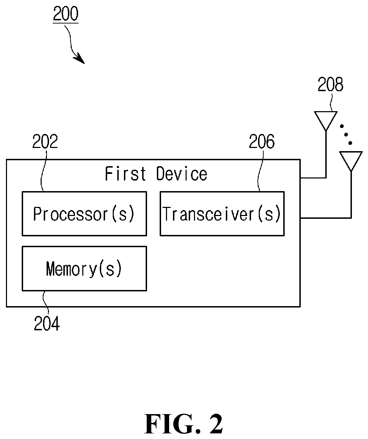

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

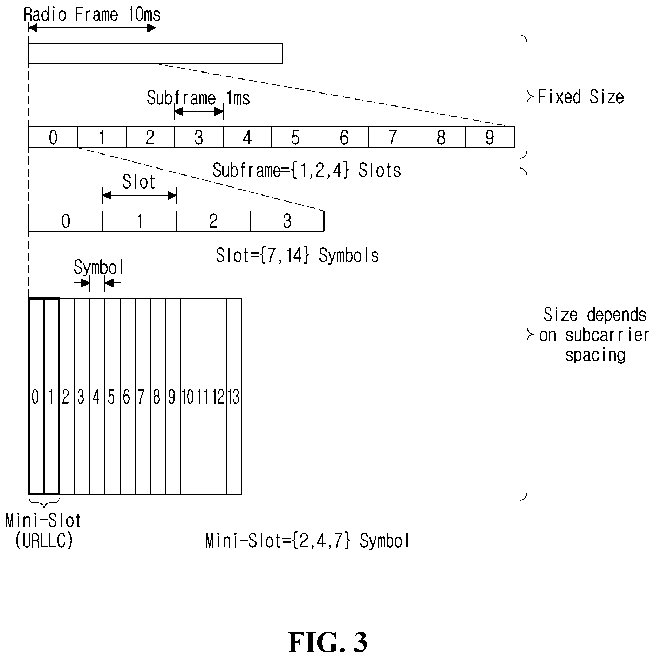

FIG. 3 exemplifies a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or $\mu$). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15[kHz]$ | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise. An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} \cdot Nf/100)T_c$ = 10 ms. Here, the radio frame is configured with 10 subframes having a duration of $T_{sf}=(\Delta f_{max} \cdot N_f/1000)T_c = 1$ ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^{\mu} \in \{0,\cdots,N_{slot}^{subframe,\mu}-1\}$ in a subframe and are numbered in an increasing order of $n_{s,f}^{\mu} \in \{0,\cdots,N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that not all OFDM symbols of a downlink slot or an uplink slot are available.

Table 3 represents the number of OFDM symbols per slot ( $N_{symb}^{slot}$ ), the number of slots per radio frame ( $N_{slot}^{frame,\mu}$ ) and the number of slots per subframe ( $N_{slot}^{subframe,\mu}$ ) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 3 is an example on μ=2 (SCS is 60 kHz), and referring to Table 3, 1 subframe may include 4 slots. 1 subframe= {1,2,4} slot shown in FIG. 3 is an example, and the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

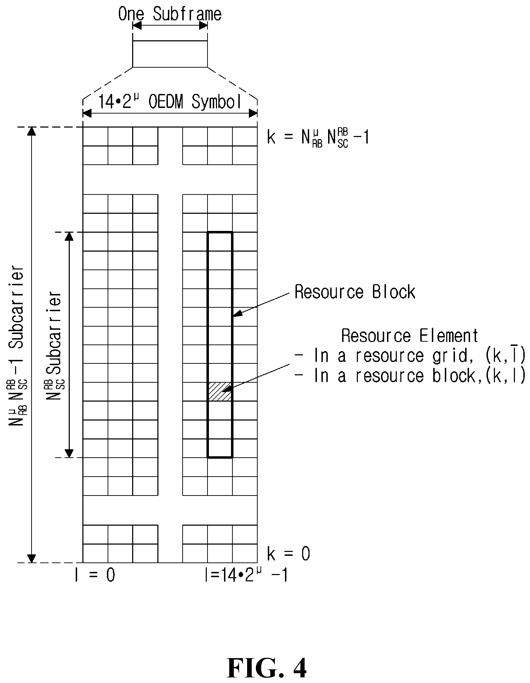

FIG. 4 exemplifies a resource grid in a wireless communication system to which the present disclosure may be applied.

Referring to FIG. 4, as an illustrative description, a resource grid is configured with $N_{RB}^{\mu}N_{SC}^{RB}$ subcarriers in a frequency domain, and one subframe is configured with $14\cdot2^{\mu}$ OFDM symbols, but the resource grid and the subframe are not limited thereto. In an NR system, a transmitted signal is described by one or more resource grids configured with $2^{\mu}N_{symb}^{(\mu)}$ OFDM symbols and $N_{RB}^{\mu}N_{SC}^{RB}$ subcarriers. Here, $N_{RB}^{\mu} \leq N_{RB}^{max,u}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k, l'). Here, $k=0, \ldots, N_{RB}^{\mu}N_{SC}^{RB}-1$ is an index in a frequency domain and $l'=0, \ldots, 2^{\mu}N_{symb}^{(\mu)}-1$ refers to a position of a symbol in a subframe. When referring to a resource element in a slot, an index pair (k, l) is used. Here, $l=0, \ldots, 2^{\mu}N_{symb}^{(\mu)}-1$. A resource element (k, l') for μ and an antenna port p corresponds to a complex value, $a_{k,f}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k, l) for a subcarrier spacing configuration μ in a frequency domain is given as in the following Equation 1.

[Equation 1]

$$n_{CRB}^{\mu}= \left\lfloor \frac{k}{N_{sc}^{RB}} \right\rfloor$$

In Equation 1, k is defined relatively to point A so that k=0 corresponds to a subcarrier centering around point A. Physical resource blocks are numbered from 0 to $N_{BWP,i}^{size,\mu}-1$ 1 in a bandwidth part (BWP) and i is the number of a BWP. A relationship between a physical resource block $n_{PRB}$ and a common resource block $n_{CRB}$ in BWP i is given by the following Equation 2.

[Equation 2]

$$n_{CRB}^{\mu}=n_{PRB}^{\mu}+N_{BWP,i}^{start,\mu}$$

$N_{BWP,i}^{start,\mu}$ is a common resource block that a BWP starts relatively to common resource block 0.

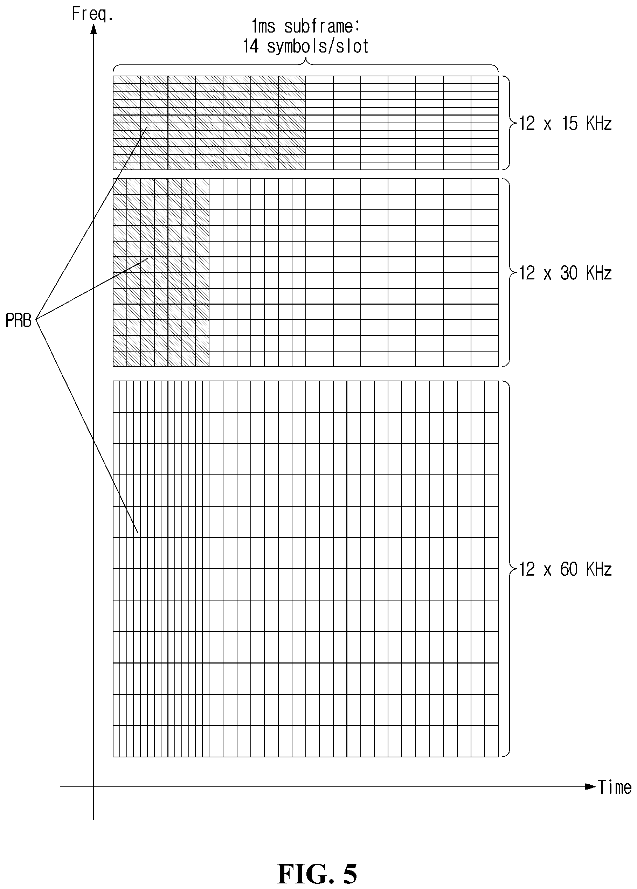

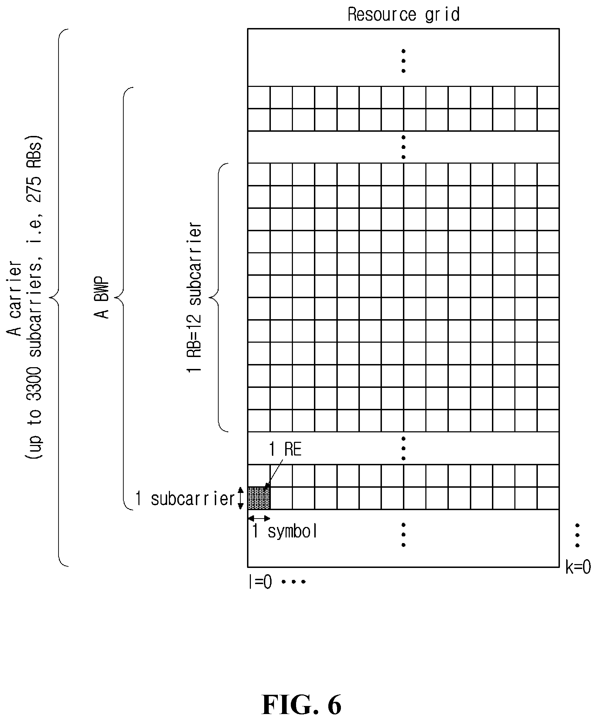

FIG. 5 exemplifies a physical resource block in a wireless communication system to which the present disclosure may be applied. In addition, FIG. 6 exemplifies a slot structure in a wireless communication system to which the present disclosure may be applied.

Referring to FIG. 5 and FIG. 6, a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

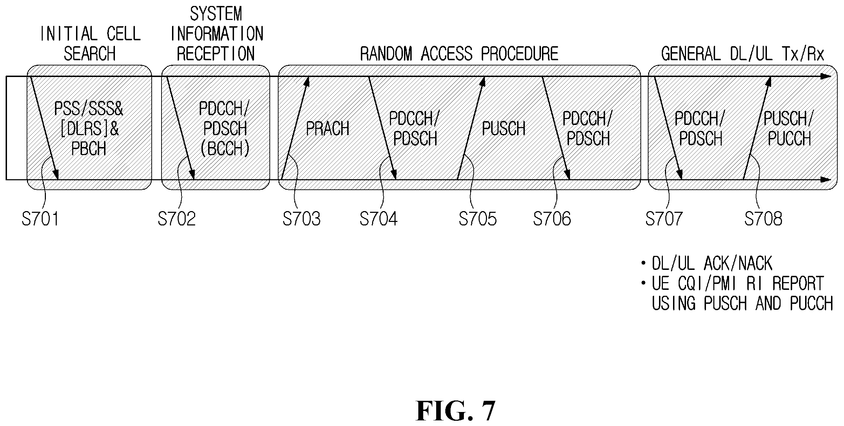

FIG. 7 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

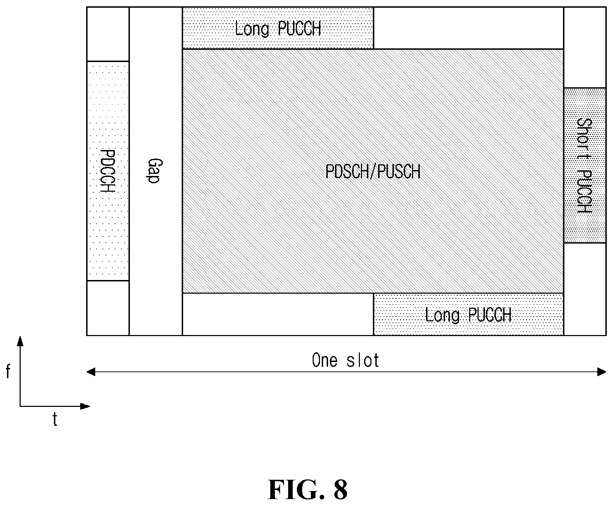

FIG. 8 illustrates an example of mapping a physical channel within a slot in a wireless communication system to which the present disclosure is applicable.

Referring to FIG. 8,

A DL control channel, DL or UL data and a UL control channel may all be included in one slot. For example, first N symbols within the slot may be used to transmit the DL control channel (hereinafter, DL control area), and last M symbols within the slot may be used to transmit the UL control channel (hereinafter, UL control area). N and M are integers equal to or greater than 0, respectively. A resource area (hereinafter, data area) between the DL control area and the UL control area may be used to transmit the DL data or transmit the UL data. A time gap for DL-to-UL or UL-to-DL switching may be present between a control area and the data area. A PDCCH may be transmitted in the DL control area, and a PDSCH may be transmitted in the DL data area. Some symbols within the slot at a time of switching from DL to UL may be used for the time gap.

Downlink (DL) physical channel/signal

(1) PDSCH

A PDSCH carries downlink data (e.g., DL-shared channel transport block, DL-SCH TB). A TB is encoded in a CodeWord (CW) and then is transmitted through a scrambling and modulation process. The CW includes one or more code blocks (CBs). One or more CBs may be lumped into one CB group (CBG). Depending on a configuration of a cell, a PDSCH may carry a maximum of 2 CWs. Scrambling and modulation are performed according to each CW, and modulation symbols generated from each CW are mapped to one or more layer. Each layer is subject to precoding, is mapped to a resource together with a DMRS, and is transmitted through a corresponding antenna port. A PDSCH may be dynamically scheduled by a PDCCH or be semi-statically scheduled (configured scheduling (CS)) based on higher layer (e.g., RRC and/or Layer 1(L1)) signal (e.g., PDCCH). Accordingly, while PDSCH transmission is accompanied by a PDCCH in dynamic scheduling, PDSCH transmission is not accompanied by a PDCCH in CS. CS includes semi-persistent scheduling (SPS).

(2) PDCCH

APDCCH carries downlink control information (DCI). For example, APCCCH (that is, DCI) carries a transmission format and resource allocation of a DL-SCH, frequency/time resource allocation information for a UL-shared channel (SCH), paging information for a paging channel (PCH), system information in the DL-SCH, frequency/time resource allocation information for a higher layer control message such as a random access response (RAR) transmitted in a PDSCH, a transmission power control command, information on activation/release of SPS/configured scheduling (CS), and the like. Various DCI formats are provided according to information in DCI.

Table 5 exemplifies DCI formats that are provided through a PDCCH.

[Table 5]

| 0_0 | Scheduling of PUSCH in one cell |
|---|---|
| 0_1 | Scheduling of one or multiple PUSCH in one cell, or indicating downlink feedback information for configured grant PUSCH (CG-DFI) |
| 1_0 | Scheduling of PDSCH in one cell |
| 1_1 | Scheduling of PDSCH in one cell, and/or triggering one shot HARQ-ACK codebook feedback |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or UL scheduling information. DCI format 2_0 is used to deliver dynamic slot format information (e.g., dynamic SFI) to a terminal, and DCI format 2_1 is used to deliver downlink pre-Emption information to a terminal. DCI format 2_0 and/or DCI format 2_1 may be delivered to terminals within a single group through a group common PDCCH that is a PDCCH delivered to terminals defined as the group.

PDCCH/DCI includes a cyclic redundancy check (CRC), and the CRC is masked/scrambled with various identifiers (e.g., a radio network temporary identifier (RNTI)) according to an owner or usage of the PDCCH. For example, if a PDCCH is targeted at a specific terminal, a CRC is masked with a cell-RNTI (C-RNTI). If a PDCCH is related to paging, a CRC is masked with a paging-RNTI (P-RNTI). If a PDCCH is related to system information (e.g., a system information block (SIB)), a CRC is masked with a system information RNTI (SI-RNTI). If a PDCCH is related to random access response, a CRC is masked with a random access-RNTI (RA-RNTI).

Table 6 exemplifies the usage and transport channels of PDCCH according RNTIs. The transport channels are transport channels related to data carried by PDCSH/PUSCH that is scheduled by a PDCCH.

[Table 6]

| RNTI | Usage | Transport Channel |
|---|---|---|
| P-RNTI | Paging and System Information change notification | PCH(Paging Channel) |
| SI-RNTI | Broadcast of System Information | DL-SCH |
| RA-RNTI | Random Access Response | DL-SCH |
| Temporary C-RNTI | Contention Resolution (when no valid C-RNTI is available) | DL-SCH |
| Temporary C-RNTI | Msg3 transmission | UL-SCH |
| C-RNTI, MCS(Modulation and Coding Scheme)-C-RNTI | Dynamically scheduled unicast transmission | UL-SCH |
| C-RNTI | Dynamically scheduled unicast transmission | DL-SCH |
| MCS-C-RNTI | Dynamically scheduled unicast transmission | DL-SCH |
| C-RNTI | Triggering of PDCCH ordered random access | N/A |
| CS(Configued Scheduling)-RNTI | Configured scheduled unicast transmission (activation, reactivation and retransmission) | DL-SCH, UL-SCH |
| CS-RNTI | Configured scheduled unicast transmission(deactivation) | N/A |
| TPC(Transmit Power Control)-PUCCH-RNTI | PUCCH power control | N/A |
| TPC-PUSCH-RNTI | PUSCH power control | N/A |
| TPC-SRS-RNTI | SRS trigger and power control | N/A |
| INT(Interruption)-RNTI | Indication pre-emption in DL | N/A |
| SFI(Slot Format Indication)-RNTI | Slot Format Indication on the given cell | N/A |
| SP(Semi-persistent)-CSI(Channel State Information)-RNTI | Activation of Semi-persistent CSI reporting on PUSCH | N/A |

A modulation scheme of PDCCH is fixed (e.g., Quadrature Phase Shift Keying, QPSK), and one PDCCH consists of 1, 2, 4, 8 or 16 control channel elements (CCE) according to an aggregation level (AL). One CCE consists of 6 resource element groups (REGs). One REG is defined by one OFDMA symbol and one (P)RB.

A PDCCH is transmitted through a control resource set (CORESET). A CORESET corresponds to a physical resource/parameter set that is used to carry a PDCCH/DCI within a BWP. For example, a CORESET includes a REG set with a given numerology (e.g., SCS, CP length, etc.). A CORESET may be configured through system information (e.g., MIB) or terminal-specific (UE-specific) higher layer (e.g., RRC) signaling. An example of a parameter/information used to configure a CORESET is as follows. One or more CORESETs are configured in one terminal, and a plurality of CORESETs may overlap in time/frequency domain.

- controlResourceSetId: represents identification information (ID) of a CORESET.
- frequencyDomainResources: represents a frequency domain resource of a CORESET. It is indicated through a bit map, and each bit corresponds to a RB group (= 6 successive RBs). For example, a most significant bit (MSB) of a bit map corresponds to a first RB group within a BWP. A RB group corresponding to a bit with a bit value of 1 is allocated as a frequency domain resource of a CORESET.
- duration: represents a time domain resource of a CORESET. It represents the number of successive OFDMA symbols constituting the CORESET. For example, duration has a value of 1 to 3.
- cce-REG-MappingType: represents a CCE-to-REG mapping type. An interleaved type and a non-interleaved type are supported.
- precoderGranularity: represents precoder granularity in frequency domain.
- tci-StatesPDCCH: represents information (e.g., TCI-StateID) indicating a transmission configuration indication (TCI) state for a PDCCH. A TCI state is used to provide a quasi-co-location (QCL) relationship between DL RS(s) within a RS set (TCI-state) and a PDCCH DMRS port.
- tci-PresentInDCI: represents whether or not a TCI field is included in DCI.
- pdcch-DMRS-ScramblingID: represents information that is used to initialize a PDCCH DMRS scrambling sequence.

In order to receive a PDCCH, a terminal may monitor a set of PDCCH candidates in a CORESET (e.g., blind decoding). A PDCCH candidate represents CCE(s) that a terminal monitors for PDCCH reception/detection. PDCCH monitoring may be performed in one or more CORESETs in an active DL BWP in each activated cell for which the PDCCH monitoring is configured. A set of PDCCH candidates monitored by a terminal is defined as a PDCCH search space (SS) set. An SS set may be a common search space (CSS) set or a UE-specific search space (USS) set.

Table 7 exemplifies a PDCCH search space.

[Table 7]

| Search Space | Type | RNTI | Use Case |
|---|---|---|---|
| Type0-PDCCH | Common | SI-RNTI on a primary cell | Broadcast of System Information |
| Type0APDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | PagingSystem Information change notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

An SS set may be configured through system information (e.g., MIB) or UE-specific higher layer (e.g., RRC) signaling. Each DL BWP of a serving cell may have S(e.g., 10) or less configured SS sets. For example, the following parameters/information may be provided for each SS set. Each SS set is associated with one CORESET, and each CORESET configuration may be associated with one or more SS sets.

- searchSpaceId: represents an ID of an SS set.
- controlResourceSetId: represents a CORESET associated with an SS set.
- monitoringSlotPeriodicityAndOffset: represents a PDCCH monitoring period slot (slot unit) and a PDCCH monitoring slot offset (slot unit).
- monitoringSymbolsWithinSlot: represents first OFDMA symbol(s) for PDCCH monitoring within a slot for which PDCCH monitoring is configured. It is indicated through a bit map, and each bit corresponds to each OFDMA symbol within the slot. An MSB of the bit map corresponds to a first OFDM symbol within the slot. An OFDMA symbol(s) corresponding to a bit(s) with a bit value of 1 corresponds to a first symbol(s) of a CORESET within the slot.

- nrofCandidates: represents the number of PDCCH candidates (e.g., one of 0, 1, 2, 3, 4, 5, 6 and 8) according to AL ={1, 2, 4, 8, 16}.
- searchSpaceType: represents whether an SS type is a CSS or a USS.
- DCI format: represents a DCI format of a PDCCH candidate.

Based on a CORESET/SS set configuration, a terminal may monitor PDCCH candidates in one or more SS sets within a slot. An occasion (e.g., time/frequency resource) on which PDCCH candidates are to be monitored is defined as a PDCCH (monitoring) occasion. One or more (monitoring) occasions may be configured within a slot.

<u>Uplink (DL) physical channel/signal</u>

(1) PUSCH

A PUSCH carries uplink data (e.g., UL-SCH TB) and/or uplink control information (UCI) and is transmitted based on a cyclic prefix-orthogonal frequency division multiplexing (CP-OFDM) waveform or a discrete Fourier transform-spread-OFDM (DFT-s-OFDM) waveform. In case the PUSCH is transmitted based on the DFT-s-OFDM waveform, a terminal transmits the PUSCH by applying transform precoding. As an example, if transform precoding is impossible (e.g., transform precoding is disabled), the terminal may transmit the PUSCH based on the CP-OFDM waveform, and if transform precoding is possible (e.g., transform precoding is enabled), the terminal may transmit the PUSCH based on the CP-OFDM waveform or the DFT-s-OFDM waveform. The PUSCH may be dynamically scheduled by a PDCCH (dynamic scheduling) or be semi-statically scheduled based on higher layer (e.g., RRC) signaling and/or Layer 1 (L1) signaling (e.g., PDCCH) (configured scheduling (CS)). Accordingly, while PUSCH transmission is accompanied by a PDCCH in dynamic scheduling, PUSCH transmission is not accompanied by a PDCCH in CS. CS includes Type-1 configured grant (CG) PUSCH transmission and Type-2 CG PUSCH transmission. In Type-1 CG, every parameter for PUSCH transmission is signaled by a higher layer. In Type-2 CG, some of parameters for PUSCH transmission are signaled by a higher layer, and the remaining parameters are signaled by a PDCCH. Basically, in CS, PUSCH transmission is not accompanied by any PDCCH.

(2) PUCCH

A PUCCH carries uplink control information (UCI). UCI includes the following.

- Scheduling request (SR): information used to request a UL-SCH resource.
- Hybrid automatic repeat and request acknowledgement (HARQ-ACK): reception response signal to a DL signal (e.g., PDSCH, SPS release PDCCH). A HARQ-ACK response may include a positive ACK (simply, ACK), a negative ACK (NACK), a discontinuous transmission (DTX) or an NACK/DTX. HARQ-ACK may be used interchangeably with A/N, ACK/NACK, HARQ-ACK/NACK and the like. HARQ-ACK may be generated in TB-unit/CBG-unit.
- Channel status information (CSI): feedback information on a DL channel. CSI includes channel quality information (CQI), a rank indicator (RI), a precoding matrix indicator (PMI), a precoding type indicator (PTI), and the like.

[Table 8] exemplifies PUCCH formats. PUCCH formats may be classified according to UCI payload size/transmission length (e.g., the number of symbols constituting a PUCCH resource)/transmission structure. Based on transmission lengths, PUCCH formats may be classified into short PUCCH (format 0, 2) and long PUCCH (format 1, 3, 4).

[Table 8]

| PUCCH format | Length in OFDM symbols $N_{symb}^{PUCCH}$ | Number of bits | Usage | Etc |
|---|---|---|---|---|
| 0 | 1 - 2 | $\leq 2$ | HARQ, SR | Sequence selection |
| 1 | 4-14 | $\leq 2$ | HARQ, [SR] | Sequence modulation |
| 2 | 1 - 2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

(0) PUCCH format 0 (PF0)

- Supportable UCI payload size: up to K bits (e.g., K = 2)
- The number of OFDM symbols constituting a single PUCCH: 1 ~ X symbols (e.g., X = 2)
- Transmission structure: consists of only UCI signals without DM-RS, and a UCI status is transmitted by selecting and transmitting one of a plurality of sequences.

(1) PUCCH format 1 (PF1)

- Supportable UCI payload size: up to K bits (e.g., K = 2)
- The number of OFDM symbols constituting a single PUCCH: Y to Z symbols (e.g., Y = 4, Z = 14)
- Transmission structure: a DM-RS and UCI are configured in TDM form in different OFDM symbols, and the UCI is formed by multiplying a specific sequence by a modulation symbol (e.g., QPSK). By applying cyclic shift (CS)/orthogonal cover code (OCC) to both the UCI and the DM-RS, CDM is supported for a plurality of PUCCH resources (complying with PUCCH format 1) (within a same RB).

(2) PUCCH format 2 (PF2)

- Supportable UCI payload size: more than K bits (e.g., K = 2)
- The number of OFDM symbols constituting a single PUCCH: 1 ~ X symbols (e.g., X = 2)
- Transmission structure: a structure in which DMRS and UCI are configured/mapped in FDM form within a same symbol and are transmitted by applying only IFFT to encoded UCI bits without DTF.

(3) PUCCH format 3 (PF3)

- Supportable UCI payload size: more than K bits (e.g., K = 2)
- The number of OFDM symbols constituting a single PUCCH: Y to Z symbols (e.g., Y = 4, Z = 14)
- Transmission structure: DMRS and UCI are configured/mapped in TDM form in different symbols and are transmitted by applying DFT to encoded UCI bits. Multiplexing is supported in a plurality of terminals by applying OCC at the front end of DFT in UCI and applying CS (or IFDM mapping) in DMRS.

(4) PUCCH format 4 (PF4)

- Supportable UCI payload size: more than K bits (e.g., K = 2)
- The number of OFDM symbols constituting a single PUCCH: Y to Z symbols (e.g., Y = 4, Z = 14)
- Transmission structure: DMRS and UCI are configured/mapped in TDM form in different symbols and are transmitted without multiplexing between terminals by applying DFT to encoded UCI bits.

SSB (Synchronization Signal Block) transmission and related operation

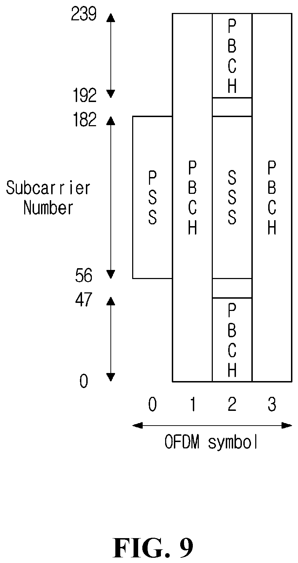

FIG. 9 illstrates the structure of an SSB (synchronization signal and broadcast channel block) applicable to the present disclosure. FIG. 9 illustrates an SSB structure. A terminal may perform cell search, system information acquisition, beam alignment for initial access, DL measurement, etc. based on an SSB. The SSB is used interchangeably with an SS/PBCH (Synchronization Signal/Physical Broadcast channel) block.

Referring to FIG. 9, the SSB is composed of a PSS, an SSS, and a PBCH. The SSB is composed of 4 consecutive OFDM symbols, and the PSS, PBCH, SSS/PBCH, and PBCH are transmitted for each OFDM symbol. The PSS and the SSS are each composed of 1 OFDM symbol and 127 subcarriers, and the PBCH is composed of 3 OFDM symbols and 576 subcarriers. Polar coding and QPSK (Quadrature Phase Shift Keying) are applied to the PBCH. The PBCH is composed of a data RE and a DMRS (Demodulation Reference Signal) RE for each OFDM symbol. There are 3 DMRS REs for each RB, and there are 3 data REs between DMRS REs.

Cell search

Cell search means a process in which a terminal acquires time/frequency synchronization of a cell and detects the cell ID (Identifier) (e.g., Physical layer Cell ID, PCID) of the cell. The PSS is used to detect a cell ID within a cell ID group, and the SSS is used to detect a cell ID group. The PBCH is used for SSB (time) index detection and half-frame detection.
The cell search process of the terminal may be summarized as shown in [Table 9] below.

[Table 9]

|  | Type of Signals | Operations |
|---|---|---|
| 1st step | PSS | * SS/PBCH block (SSB) symbol timing acquisition<br>* Cell ID detection within a cell ID group (3 hypothesis) |
| 2nd Step | SSS | * Cell ID group detection (336 hypothesis) |
| 3rd Step | PBCH DMRS | * SSB index and Half frame (HF) index(Slot and frame boundary detection) |
| 4th Step | PBCH | * Time information (80 ms, System Frame Number (SFN), SSB index, HF)* Remaining Minimum System Information (RMSI) Control resource set (CORE-SET)/Search space configuration |
| 5th Step | PDCCH and PDSCH | * Cell access information* RACH configuration |

There are 336 cell ID groups, and there are 3 cell IDs for each cell ID group. There are a total of 1008 cell IDs, and the cell ID may be defined by [Equation 3].

[Equation 3]

$$N_{ID}^{cell}=3N_{ID}^{(1)}+N_{ID}^{(2)} \quad where \ N_{ID}^{(1)}\in\{0,1,\cdots,335\} \ and \ N_{ID}^{(2)}\in\{0,1,2\}$$

where, $N_{ID}^{cell}$ denotes a cell ID (e.g., PCID). $N_{IL}^{(1}$ denotes a cell ID group and is provided/obtained through an SSS.

$N_{IL}^{(2}$ denotes a cell ID within a cell ID group and is provided/obtained through a PSS.
A PSS sequence $d_{PSS}(n)$ may be defined to satisfy [Equation 4].

[Equation 4]

$$d_{PSS}(n)=1-2x(m)$$
$$m=(n+43N_{ID}^{(2)}) \bmod 127$$

where, $0\leq n<127$, $x(i+7)=(x(i+4)+x(i)) \bmod 2$, and $[x(6) \ x(5) \ x(4) \ x(3) \ x(2) \ x(1) \ x(0)]=[1 \ 1 \ 1 \ 0 \ 1 \ 1 \ 0]$
An SSS sequence $d_{SSS}(n)$ may be defined to satisfy [Equation 5].

[Equation 5]

$$d_{SSS}(n)=[1-2x_0((n+m_0) \bmod 127)][1-2x_1((n+m_1) \bmod 127)]$$

$$m_0=15 \left\lfloor \frac{N_{ID}^{(1)}}{112} \right\rfloor +5N_{ID}^{(2)}$$

$$m_1=N_{ID}^{(1)} \bmod 112$$

where, $0 \leq n < 127$, $x_0(i+7)=(x_0(i+4)+x_0(i)) \bmod 2$, $x_1(i+7)=(x_1(i+1)+x_1(i)) \bmod 2$, $[x_0(6)x_0(5)x_0(4)x_0(3)x_0(2)x_0(1)x_0(0)]=[0\ 0\ 0\ 0\ 0\ 0\ 1]$, and $[x_1(6)x_1(5)x_1(4)x_1(3)x_1(2)x_1(1)x_1(0)]=[0\ 0\ 0\ 0\ 0\ 0\ 1]$

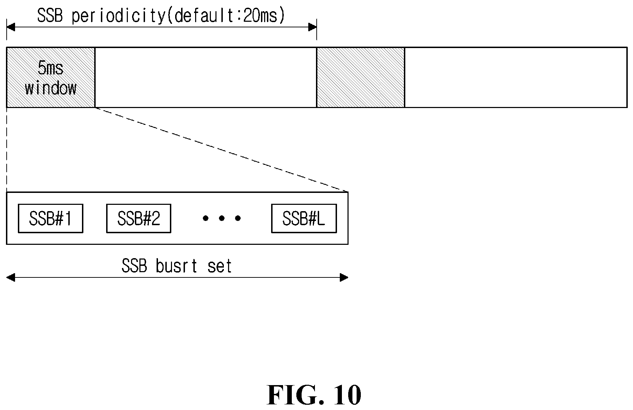

FIG. 10 illustrates transmission of an SSB applicable to the present disclosure. The SSB is transmitted periodically according to the SSB periodicity. The SSB basic period assumed by the terminal during initial cell search is defined as 20 ms. After cell access, the SSB may be set to one of {5 ms, 10 ms, 20 ms, 40 ms, 80 ms, 160 ms} by the network (e.g., base station). An SSB burst set is configured at the beginning of the SSB period. The SSB burst set consists of a 5-ms time window (i.e., half-frame), and an SSB may be transmitted at most L times within the SSB burst set. The maximum number of SSB transmissions L may be given as follows depending on the frequency band of the carrier. One slot includes at most two SSBs.

- For frequency range up to 3 GHz, L = 4
- For frequency range from 3GHz to 6 GHz, L = 8
- For frequency range from 6 GHz to 52.6 GHz, L = 64

The temporal position of a candidate SSB within an SSB burst set may be defined as follows according to the SCS. The temporal position of a candidate SSB is indexed from 0 to L-1 (SSB index) in time order within the SSB burst set (i.e., half-frame). Candidate SSB and SSB candidate are used interchangeably in the specification.

- Case A - 15 kHz SCS: The index of the starting symbol of the candidate SSB is given as {2, 8} + 14*n.

    - For operation without shared spectrum channel access (e.g., L-band, LCell): If the carrier frequency is 3 GHz or less, n = 0, 1. If the carrier frequency is 3 GHz to 6 GHz, n = 0, 1, 2, 3.
    - For operation with shared spectrum channel access (e.g., U-band, UCell): n=0, 1, 2, 3, 4.

- Case B - 30 kHz SCS: The index of the starting symbol of the candidate SSB is given as {4, 8, 16, 20} + 28*n. If the carrier frequency is 3 GHz or less, n=0. If the carrier frequency is 3 GHz to 6 GHz, n=0, 1.
- Case C - 30 kHz SCS: The index of the starting symbol of the candidate SSB is given as {2, 8} + 14*n.

    - For operation without shared spectrum channel access: (1) For paired spectrum operation, when the carrier frequency is 3 GHz or less, n=0, 1. When the carrier frequency is within FR1 and greater than 3 GHz, n=0, 1, 2, 3. (2) For non-paired spectrum operation, when the carrier frequency is 2.4 GHz or less, n=0, 1. When the carrier frequency is within FR1 and greater than 2.4 GHz, n=0, 1, 2, 3.
    - For operation without shared spectrum channel access: n=0, 1, 2, 3, 4, 6, 7, 8, 9.

- Case D - 120 kHz SCS: The index of the starting symbol of the candidate SSB is given as {4, 8, 16, 20} + 28*n. For carrier frequencies within FR2, n=0, 1, 2, 3, 5, 6, 7, 8, 10, 11, 12, 13, 15, 16, 17, 18.
- Case E - 240 kHz SCS: The index of the starting symbol of the candidate SSB is given as {8, 12, 16, 20, 32, 36, 40, 44} + 56*n. For carrier frequencies within FR2, n=0, 1, 2, 3, 5, 6, 7, 8.

For operation with shared spectrum channel access, in the case of a shared spectrum channel access operation, the terminal assumes that the SSB transmission within a half-frame is within a discovery burst transmission window starting from the first symbol of the first slot within the half-frame. The terminal may be provided with a discovery burst transmission window period for each serving cell. If the discovery burst transmission window period is not provided, the terminal regards the discovery burst transmission window period as a half-frame. For each serving cell, the terminal assumes that the repetition period of the discovery burst transmission window is the same as the repetition period of the half-frame for SSB reception. The terminal may assume that among the SSBs of the serving cell, SSB(s) having the same

$$(N_{DM\text{-}RS}^{PBCH} \bmod N_{SSB}^{QCL}$$

value within the same discovery burst transmission window or across different discovery burst transmission windows are in a QCL (co-located) relationship. $N_{DM\text{-}RS}^{PBCH}$ represents the DM-RS sequence index of the PBCH of SSB, and $N_{SSB}^{QCL}$ is (i) provided by ssbPositionQCL-Relationship, or (ii) if ssbPositionQCL-Relationship is not provided, may be obtained from the MIB (master information block) of the SSB based on [Table 10].

[Table 10]

| subCarrierSpacingCommon | [LSB of ssb-SubcarrierOffset] | $N_{SSB}^{QCL}$ |
|---|---|---|
| scs 15 or 60 | 0 | 1 |
| scs 15 or 60 | 1 | 2 |
| scs 30 or 120 | 0 | 4 |
| scs 30 or 120 | 1 | 8 |

ssbSubcarrierSpacingCommon represents SCS of RMSI only for "operation without shared spectrum". The terminal assumes that the number of SSBs transmitted on the serving cell within the discovery burst transmission window is no more than $N_{SSB}^{QCL}$. The terminal may determine the SSB index according to $(N_{DM\text{-}RS}^{PBCH} \bmod N_{SSB}^{QCL}$ or $(i \bmod N_{SSB}^{QCL}$. Here, $i$ represents a candidate SSB index. Accordingly, more than one candidate SSB may correspond to one SSB index. Candidate SSBs corresponding to the same SSB index are QCLed.

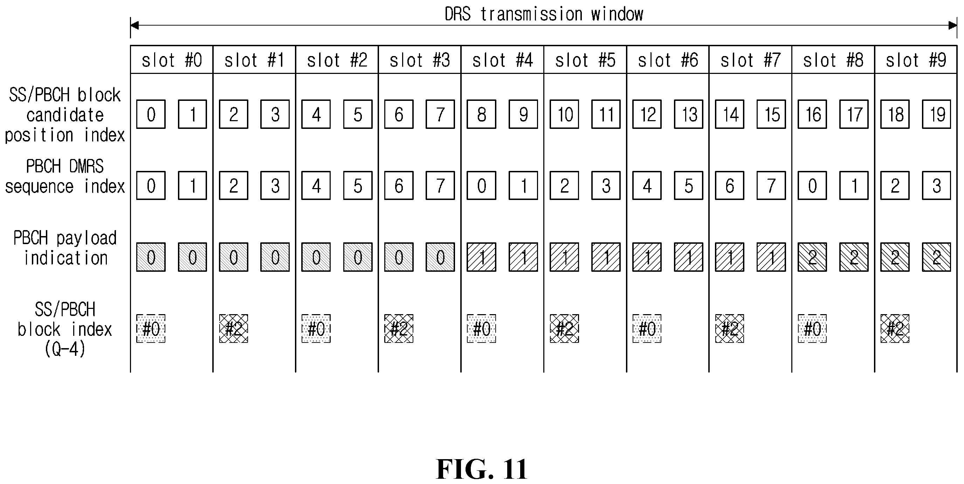

FIG. 11 illustrates examples of SSB candidate positions applicable to the present disclosure. FIG. 11 illustrates a case where Q is 4 and ssb-PositionsInBurst is set to '10100000'. In this case, only SSBs with SSB (SS/PBCH block) indexes of #0/#2 may be transmitted. ssb-PositionsInBurst and Q may be used to provide rate matching pattern within the DRS (Discovery Reference Signal) transmission window (or, discovery burst transmission window). For example, the terminal may perform rate matching for all SSB candidate position indexes QCLed with the actual transmitted SSB indexes provided by ssb-PositionsInBurst. In FIG. 11, the terminal may perform rate matching for time/frequency resources of SSB candidate position indexes 0/2/4/6/8/10/12/14/16/18. Therefore, when receiving a PDSCH scheduled by a PDCCH scrambled with CRC by C-RNTI, MCS-C-RNTI, CS-RNTI, RA-RNTI, MsbB-RNTI, P-RNTI, TC-RNTI (or a PDSCH with SPS (or with CRC) is scrambled by SI-RNTI and the system information indicator in the PDCCH (i.e., DCI) is set to 1), the terminal may assume SSB transmission according to ssb-PositionsInBurst if the PDSCH resource allocation overlaps with a PRB including SSB transmission resources (e.g., SS/PBCH block candidate position indexes 0/2/4/6/8/10/12/14/16/18). That is, the terminal may assume that the PRB including SSB transmission resources in the OFDM symbol in which SSB is transmitted is not available for PDSCH (i.e., not mapped).

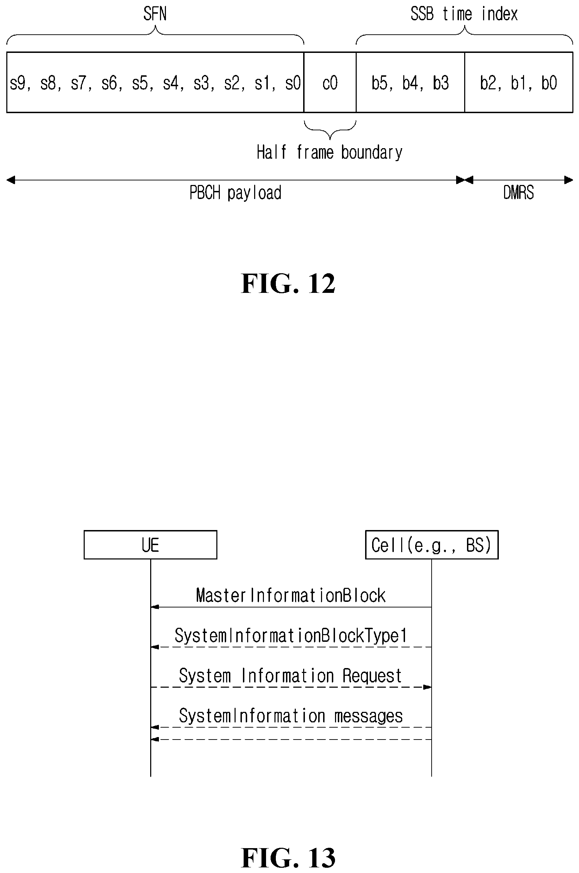

FIG. 12 illustrates an example of downlink time synchronization information applicable to the present disclosure. FIG. 12 illustrates that a terminal acquires information regarding DL time synchronization. The terminal may acquire DL synchronization by detecting an SSB. The terminal may identify the structure of an SSB burst set based on the detected SSB index, and may detect a symbol/slot/half-frame boundary accordingly. The number of the frame/half-frame to which the detected SSB belongs may be identified using SFN information and half-frame indication information.

Specifically, the terminal may obtain 10-bit SFN (System Frame Number) information from the PBCH (s0 to s9). Of the 10-bit SFN information, 6 bits are obtained from a MIB (Master Information Block) and the remaining 4 bits are obtained from a PBCH TB (Transport Block).

Next, the terminal may obtain 1-bit half-frame indication information (c0). When the carrier frequency is 3 GHz or less, the half-frame indication information may be implicitly signaled using a PBCH DMRS. The PBCH DMRS indicates 3-bit information by using one of 8 PBCH DMRS sequences. Therefore, in the case of L=4, among the 3 bits that may be indicated using 8 PBCH DMRS sequences, 1 bit remaining after indicating the SSB index may be used to indicate the half-frame.

Finally, the terminal may obtain the SSB index based on the DMRS sequence and the PBCH payload. The SSB candidates are indexed from 0 to L-1 in time order within the SSB burst set (i.e., half-frame). When L = 8 or 64, the Least Significant Bit (LSB) 3 bits of the SSB index may be indicated using 8 different PBCH DMRS sequences (b0 to b2). When L = 64, the Most Significant Bit (MSB) 3 bits of the SSB index are indicated via the PBCH (b3 to b5). When L = 2, the LSB 2 bits of the SSB index may be indicated using 4 different PBCH DMRS sequences (b0, b1). When L = 4, among the 3 bits that may be indicated using 8 PBCH DMRS sequences, 1 bit remaining after indicating the SSB index may be used to indicate the half-frame (b2).

Acquisition of system information

FIG. 13 exemplifies a process of obtaining system information (SI). A terminal may obtain AS-/NAS-information through the process of obtaining SI. The process of obtaining SI may be applied to a terminal in RRC_IDLE state, RRC_INACTIVE state and RRC_CONNECTED state.

SI is divided into a master information block (MIB) and a plurality of system information blocks (SIBs). Apart from MIB, SI may be referred to as remaining minimum system information (RMSI). For reference, further details are described below.

- A MIB includes information/parameter related to reception of SystemInformationBlockType1 (SIB1) and is transmitted through a PBCH of an SSB.
- A MIB includes information/parameter related to reception of SIB1 and is transmitted through a PBCH of an SSB. 3GPP TS 38.331 may be referred to for information on the MIB, which may include the following fields.

> - subCarrierSpacingCommon ENUMERATED {scs15or60, scs30or120},
>
> - ssb-SubcarrierOffset INTEGER (0..15),
>
> - pdcch-ConfigSIB1
>
> - dmrs-TypeA-Position
>
> ...
>
> - spare

For description of each field, refer to Table 11.

[Table 11]

| |
|---|
| *pdcch-ConfigSIB1* <br> Determines a common *ControlResourceSet* (CORESET), a common search space and necessary PDCCH parameters. If the field *ssb-SubcarrierOffset* indicates that *SIB1* is absent, the field *pdcch-ConfigSIB1* indicates the frequency positions where the UE may find SS/PBCH block with *SIB1* or the frequency range where the network does not provide SS/PBCH block with *SIB1* (see TS 38.213, clause 13). |
| *ssb-SubcarrierOffset* <br> Corresponds to $k_{SSB}$ (see TS 38.213), which is the frequency domain offset between SSB and the overall resource block grid in number of subcarriers. (See TS 38.211, clause 7.4.3.1). <br> The value range of this field may be extended by an additional most significant bit encoded within PBCH as specified in TS 38.213. <br> This field may indicate that this cell does not provide *SIB1* and that there is hence no CORESET#0 configured in *MIB* (see TS 38.213, clause 13). In this case, the field *pdcch-ConfigSIB1* may indicate the frequency positions where the UE may (not) find a SS/PBCH with a control resource set and search space for *SIB1* (see TS 38.213, clause 13). |
| *subCarrierSpacingCommon* <br> Subcarrier spacing for *SIB1,* Msg.2/4 for initial access, paging and broadcast SI-messages. If the UE acquires this *MIB* on an FR1 carrier frequency, the value *scs15or60* corresponds to 15 kHz and the value *scs30or120* corresponds to 30 kHz. If the UE acquires this *MIB* on an FR2 carrier frequency, the value *scs15or60* corresponds to 60 kHz and the value *scs30or120* corresponds to 120 kHz. |
| *dmrs-TypeA-Position* <br> Position of (first) DM-RS for downlink (e.g., PDSCH) and uplink (e.g., PUSCH). pos2 represents the 2nd symbol in a slot and pos2 represents the 3rd symbol in a slot. |

When selecting an initial cell, a terminal assumes that a half-frame with an SSB is repeated with a 20ms periodicity. Based on an MIB, the terminal may check whether or not there is a control resource set (CORESET) (e.g., CORESET#0) for a Type0-PDCCH common search space. If kSSB <= 23 (for FR1) or kSSB <= 11 (for FR2), the terminal may determine that there is a CORESET for the Type0-PDCCH common search space. If kSSB > 23 (for FR1) or kSSB > 11 (for FR2), the terminal may determine that there is no CORESET for the Type0-PDCCH common search space. The Type0-PDCCH common search space is a type of PDCCH search space and is used to transmit a PDCCH that schedules an SI message. When the Type0-PDCCH common search space is present, the terminal may determine, based on information in the MIB (e.g., pdcch-ConfigSIB 1), (i) a plurality of continuous RBs and one or more symbols that constitute CORESET (e.g., CORESET #0) and (ii) a PDCCH occasion (that is, a time domain location for PDCCH reception) (e.g., search space #0). When the Type0-PDCCH common search space is not present, pdcch-ConfigSIB 1 provides information on a frequency location, in which an SSB/SIB1 is present, and a frequency range in which the SSB/SIB1 is not present.

- SIB1 includes information related to the availability and scheduling (e.g., transmission periodicity, SI-window size) of remaining SIBs (hereinafter, SIBx, x is an integer equal to or greater than 2). For example, SIB1 may notify whether or not SIBx is periodically broadcast and whether or not it is provided on-demand at a request of a terminal. In case SIBx is provided on-demand, SIB1 may include information necessary for the terminal to perform an SI request. SIB1 is transmitted through a PDSCH, a PDCCH, which schedules SIB1, is transmitted through a Type0-PDCCH common search space, and SIB1 is transmitted through a PDSCH indicated by the PDCCH.
- SIBx is included in an SI message and is transmitted through a PDSCH. Each SI message is transmitted within a time window (that is, SI-window) that occurs periodically.

Beam alignment

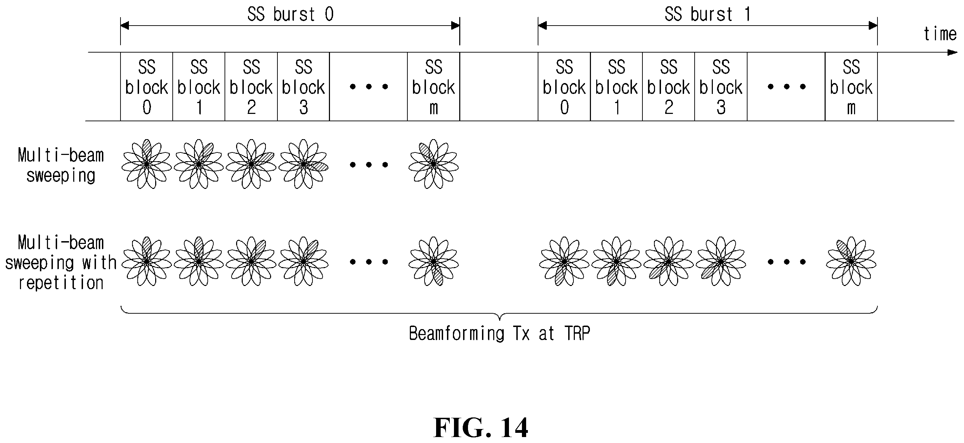

FIG. 14 illustrates an example of multi-beam transmission that is applicable to the present disclosure.
Beam sweeping means that a transmission reception point (TRP) (e.g., base station/cell) changes a beam (direction) of a radio signal according to time (hereinafter, the terms "beam" and "beam direction" may be used interchangeably). An SSB may be periodically transmitted by using beam sweeping. In this case, an SSB index is implicitly linked to an SSB beam. The SSB beam may change in an SSB (index) unit or change in an SSB (index) group unit. In the latter case, the SSB beam remains the same within an SSB (index) group. That is, a transmit beam direction of an SSB is repeated in a plurality of continuous SSBs. In an SSB burst set, a maximum number L of transmission of an SSB has a value of 4, 8 or 64 according to a frequency band to which a carrier belongs. Accordingly, in an SSB burst set, a maximum number of SSB beams may also be given according to a frequency band of a carrier as follows.

- For frequency range up to 3 GHz, Max number of beams = 4
- For frequency range from 3GHz to 6 GHz, Max number of beams = 8
- For frequency range from 6 GHz to 52.6 GHz, Max number of beams = 64

    * In case multi-beam transmission is not applied, there is one SSB beam.

In case a terminal attempts initial access to a base station, the terminal may align a beam with the base station based on an SSB. For example, after the terminal performs SSB detection, the terminal identifies a best SSB. Then, the terminal may transmit a RACH preamble to the base station by using a PRACH resource linked/corresponding to an index (that is, beam) of the best SSB. The SSB may be used to align a beam between the base station and the terminal even after the initial access.

Channel measurement and rate-matching

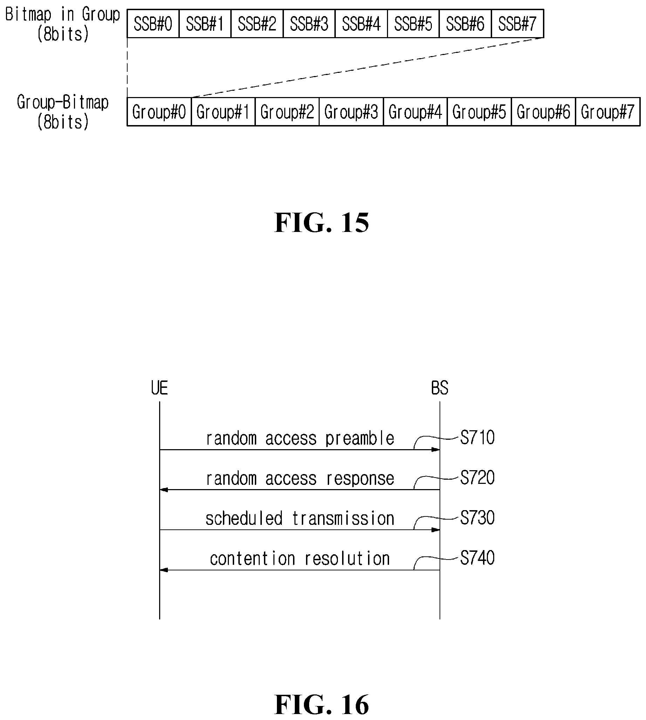

FIG. 15 illustrates an example of indication of an actually transmitted SSB (SSB_tx) that is applicable to the present disclosure.
In an SSB burst set, up to L SSBs may be transmitted, and an actual number/position of transmitted SSBs may vary according to each base station/cell. The actual number/position of transmitted SSBs is used for rate-matching and measurement, and information on an actually transmitted SSB (e.g., ssb-PositionsInBurst) is indicated as follows.

- In relation to rate-matching: it may be indicated through terminal-specific RRC signaling or RMSI. Terminal-specific RRC signaling includes a full (e.g., L-length) bit map in both frequency ranges of below 6 GHz and above 6 GHz. On the other hand, RMSI includes a full bit map below 6 GHz and includes a compressed bit map above 6 GHz as illustrated. Specifically, information on an actually transmitted SSB may be indicated by using a group-bit map (8 bits) + an intra-group bit map (8 bits). Herein, a resource (e.g., RE) indicated through terminal-specific RRC signaling or RMSI may be reserved for SSB transmission, and a PDSCH/PUSCH may be rate-matched by considering an SSB resource.

- In relation to measurement: In a RRC-connected mode, a network (e.g., base station) may indicate an SSB set to be measured within a measurement slot. The SSB set may be indicated according to each frequency layer. In case there is no indication of the SSB set, a default SSB set is used. The default SSB set includes all SSBs within the measurement slot. An SSB set may be indicated by using a full (e.g., L-length) bit map of RRC signaling. In a RRC idle mode, the default SSB set is used.

Random access (RA) process

General procedure

A random access process is used for various purposes. For example, the random access process may be used for initial access, handover, and terminal-triggered UL data transmission. A terminal may obtain UL synchronization and a UL transmission resource through the random access process. The random access process is divided into a contention-based process and a non-contention based or dedicated process. The random access process is used interchangeably with a random access channel (RACH) process.

FIG. 16 illustrates an example of a contention-based random access procedure that is applicable to the present disclosure. Referring to FIG. 16, a terminal receives information on random access from a base station through system information. Next, when random access is needed, the terminal transmits a random access preamble (message 1) to the base station (S710). When the base station receives the random access preamble from the terminal, the base station transmits a random access response (RAR) message (message 2) to the terminal (S720). Specifically, scheduling information for the RAR message may be CRC-masked with a random access-RNTI (RA-RNTI) and be transmitted through an L 1/L2 control channel (PDCCH). The PDCCH masked with RA-RNTI may be transmitted only through a common search space (CSS). When receiving a scheduling signal masked with RA-RNTI, the terminal may receive a RAR message from a PDSCH indicated by the scheduling information. Next, the terminal checks whether or not the RAR message has random access response information indicated to the terminal. Whether or not the RAR message has random access response information indicated to the terminal may be determined based on whether or not there is a random access preamble ID (RAID) for the preamble transmitted by the terminal. The random access response information includes timing offset information for UL synchronization (e.g., Timing Advance Command (TAC)), UL scheduling information (e.g., UL grant), and terminal temporary identification information (e.g., Temporary-C-RNTI (TC-RNTI)). If the terminal receives the random access response information, the terminal transmits UL-shared channel (SCH) data (message 3) through a PUSCH according to UL scheduling information (S730). After receiving the UL-SCH data, the base station transmits a contention resolution message (message 4) to the terminal (S740).

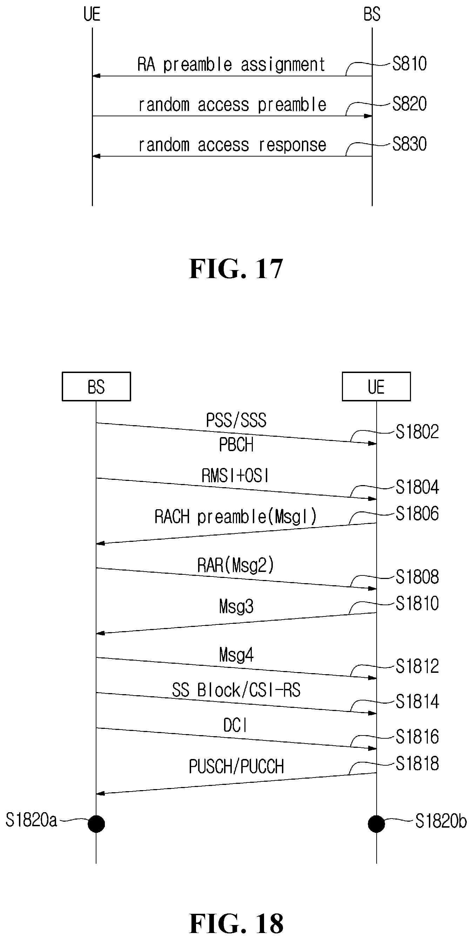

FIG. 17 illustrates an example of a non-contention-based random access procedure that is applicable to the present disclosure. A non-contention-based random access process may be used in a handover process or be present when requested by a command of a base station. A basic process is the same as a contention-based random access process.

Referring to FIG. 17, a terminal is allocated a dedicated random access preamble from a base station (S810). Dedicated random access preamble indication information (e.g., preamble index) may be included in a RRC message (e.g., handover order) or be received through a PDCCH order. After a random access process is initiated, the terminal transmits the dedicated random access preamble to the base station (S820). Next, the terminal receives a random access response from the base station (S830), and the random access process expires. The random access process in SCell may be initiated only by a PDCCH order.

In NR, DCI format 1_0 is used to initiate a non-contention-based random access process by a PDCCH order. DCI format 1_0 is used to schedule a PDSCH in one DL cell. Meanwhile, in case cyclic redundancy check (CRC) of DCI format 1_0 is scrambled with C-RNTI and every bit value of "Frequency domain resource assignment" field is 1, DCI format 1_0 is used as a PDCCH order that indicates a random access process. In this case, the field of DCI format 1_0 is configured as follows.

- RA preamble index: 6 bits
- UL/supplementary UL (SUL) indicator: 1 bit. In case all bit values of RA preamble index are not 0 and SUL is configured for a terminal within a cell, it indicates a UL carrier in which a PRACH is transmitted within the cell. Otherwise, it is reserved.
- SSB index: 6 bits. In case all bit values of RA preamble index are not 0, it indicates an SSB that is used to determine a RACH occasion for PRACH transmission. Otherwise, it is reserved.
- PRACH mask index: 4 bits. In case all bit values of RA preamble index are not 0, it indicates a RACH occasion associated with an SSB that is indicated by an SSB index. Otherwise, it is reserved.

- Reserved: 10 bits

In DCI format 1_0 does not correspond to a PDCCH order, DCI format 1_0 is composed of fields that are used to schedule a PDSCH (e.g., time domain resource assignment, modulation and coding scheme (MCS), HARQ process number, PDSCH-to-HARQ_feedback timing indicator, etc.).

Network access and communication process

A terminal may perform a network access process. For example, while performing access to a network (e.g., base station), the terminal may receive system information and configuration information, which are necessary to perform a procedure and/or methods described/proposed below, and store the information in a memory. Configuration information necessary for the present disclosure may be received through higher layer (e.g., RRC layer, medium access control (MAC) layer, etc.) signaling.

FIG. 18 illustrates an example of a network initial access and communication procedure that is applicable to the present disclosure. In NR, a physical channel and a reference signal may be transmitted by using beamforming. In case beamforming-based signal transmission is supported, there may be a beam management process for aligning a beam between a base station and a terminal. In addition, a signal proposed in the present disclosure may be transmitted/received by using beamforming. In a radio resource control (RRC) IDLE mode, beam alignment may be performed based on an SSB. On the other hand, in a RRC-CONNECTED mode, beam alignment may be performed based on CSI-RS (in DL) and SRS (in UL). Meanwhile, in case beamforming-based signal transmission is not supported, a beam-related operation may be skipped in the description below.

Referring to FIG. 18, a base station (e.g., BS) may periodically transmit an SSB (S1802). Herein, the SSB includes PSS/SSS/PBCH. The SSB may be transmitted by using beam sweeping (refer to FIG. 14). Next, the base station may transmit remaining minimum system information (RMSI) and other system information (OSI) (S1804). RMSI may include information that is necessary for the terminal to have an initial access to the base station (e.g., PRACH configuration information). Meanwhile, after performing SSB detection, the terminal identifies a best SSB. Next, the terminal may transmit a RACH preamble (message 1 (Msg1)) to the base station by using a PRACH resource linked/corresponding to an index (that is, beam) of the best SSB (S1806). A beam direction of the RACH preamble is associated with the PRACH resource. Association between the PRACH resource (and/or the RACH preamble) and the SSB (index) may be configured through system information (e.g., RMSI). Next, as a part of a RACH process, the base station may transmit a random access response (Msg2) as a response to the RACH preamble (S1808), and the terminal may transmit Msg3 (e.g., RRC connection request) by using a UL grant in the RAR (S1810), and the base station may transmit a contention resolution message (Msg4) (S1812). Msg4 may include a RRC connection setup.

When a RRC connection between the base station and the terminal is configured through the RACH process, subsequent beam alignment may be performed based on an SSB/CSI-RS (in DL) and an SRS (in UL). For example, the terminal may receive the SSB/CSI-RS (S1814). The SSB/CSI-RS may be used for the terminal to generate a beam/CSI report. Meanwhile, the base station may request the beam/CSI report to the terminal through DCI (S1816). In this case, the terminal may generate the beam/CSI report based on the SSB/CSI-RS and transmit the generated beam/CSI report to the base station through a PUSCH/PUCCH (S1818). The beam/CSI report may include a beam measurement result, information on a preferred beam, and the like. The base station and the terminal may switch beams based on the beam/CSI report (S1820a and S1820b).

Next, the terminal and the base station may perform a procedure and/or methods described below. For example, based on configuration information obtained from a network access process (e.g., a system information acquisition process, a RRC connection process through RACH, etc.), the terminal and the base station may process information, which is present in a memory as proposed by the present disclosure, and transmit a radio signal or process and store a received radio signal. Herein, the radio signal may include at least one of a PDCCH, a PDSCH and a reference signal (RS) in downlink and at least one of a PUCCH, a PUSCH and an SRS in downlink.

Discontinuous reception (DRX) operation

A terminal may perform a DRX operation. A terminal, in which DRX is configured, may reduce power consumption by discontinuously receiving a DL signal. DRX may be performed in a radio resource control (RRC)_IDLE state, a RRC_INACTIVE state, and a RRC_CONNECTED state. In the RRC_IDLE state and in the RRC_INACTIVE state, DRX is used to discontinuously receive a paging signal. Hereinafter, DRX performed in the RRC_CONNECTED state (RRC_CONNECTED DRX) will be described.

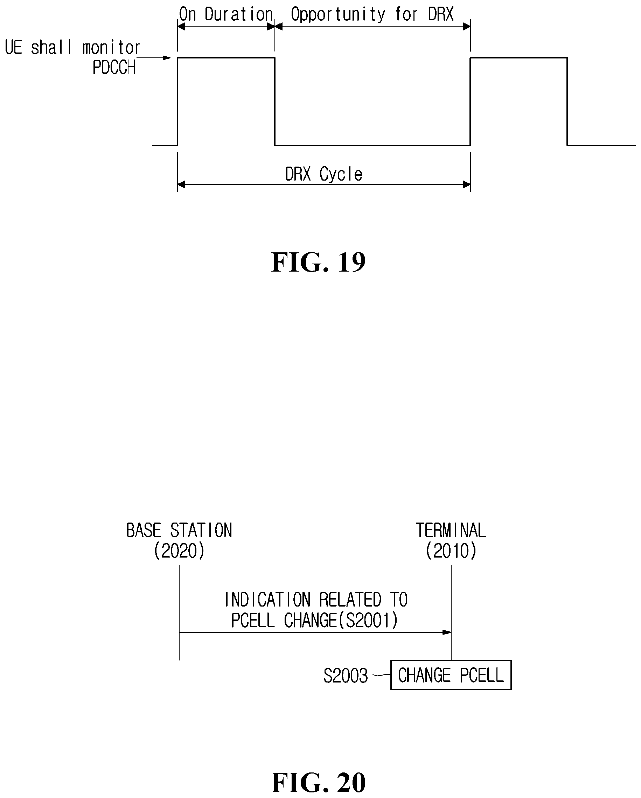

FIG. 19 illustrates an example of a DRX cycle that is applicable to the present disclosure (RRC_CONNECTED state).

Referring to FIG. 19, a DRX cycle consists of On Duration and Opportunity for DRX. The DRX cycle defines a time interval at which On Duration is periodically repeated. On Duration represents a time slot where a terminal performs monitoring to receive a PDCCH. When DRX is configured, the terminal perform PDCCH monitoring during On Duration. If there is a PDCCH that is successfully detected during PDCCH monitoring, the terminal operates an inactivity timer and maintains an awake state. On the other hand, if there is no PDCCH that is successfully detected during PDCCH monitoring, the terminal goes into a sleep state after On Duration. Accordingly, in case DRX is configured, PDCCH monitoring/reception may be discontinuously performed in time domain, when the above-described/proposed procedure and/or method are performed. For example, in case DRX is configured, a PDCCH reception occasion (e.g., a slot with a PDCCH search space) in the present disclosure may be discontinuously configured according to a DRX configuration. On the other hand, in case DRX is not configured, PDCCH monitoring/reception may be continuously performed in time domain, when the above-described/proposed procedure and/or method are performed. For example, in case DRX is not configured, a PDCCH reception occasion (e.g., a slot with a PDCCH search space) in the present disclosure may be continuously configured. Meanwhile, irrespective of whether or not DRX is configured, PDCCH monitoring may be constrained in a time slot configured as a measurement gap.

Table 12 shows a process of a terminal related to DRX (RRC_CONNECTED state). Referring to Table 12, DRX configuration information is received through higher layer (e.g., RRC) signaling, and whether DRX is ON/OFF is controlled by a DRX command of an MAC layer. If DRX is configured, as exemplified in FIG. 19, a terminal may discontinuously perform PDCCH monitoring, when performing a procedure and/or a method described/proposed in the present disclosure.

[Table 12]

|  | Type of signals | UE procedure |
|---|---|---|
| 1st step | RRC signalling(MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

Here, MAC-CellGroupConfig includes configuration information that is necessary to configure a medium access control (MAC) parameter for a cell group. MAC-CellGroupConfig may also include configuration information related to DRX. For example, MAC-CellGroupConfig may include the following information to define DRX.

- Value of drx-OnDurationTimer: defines a length of a starting interval of a DRX cycle.
- Value of drx-InactivityTimer: defines a length of a time interval at which a terminal remains awake after a PDCCH occasion on which a PDCCH indicating initial UL or DL data is detected.
- Value of drx-HARQ-RTT-TimerDL: defines a length of a maximum time interval until DL retransmission is received, after DL initial transmission is received.
- Value of drx-HARQ-RTT-TimerDL: defines a length of a maximum time interval until grant for UL retransmission is received, after grant for UL initial transmission is received.
- drx-LongCycleStartOffset: defines a time length and a starting point of a DRX cycle.
- drx-ShortCycle (optional): defines a time length of a short DRX cycle.

Herein, if any one of drx-OnDurationTimer, drx-InactivityTimer, drx-HARQ-RTT-TimerDL, and drx-HARQ-RTT-TimerDL is operating, a terminal remains awake and performs PDCCH monitoring on every PDCCH occasion.

Specific embodiments of the present disclosure

The present disclosure relates to dynamically changing a primary cell (PCell) in a wireless communication system and proposes a technology of changing a PCell based on a PCell change-related indication. Specifically, the present disclosure describes a procedure for changing a PCell and various embodiments related to change of the PCell.

Energy saving of a base station may contribute to constructing an eco-friendly network through reduction of carbon emissions and to reducing operation expenditure (OPEX) of communication service providers. Accordingly, in wireless communication systems including 3GPP, energy saving of a base station is an important consideration. Especially, with the introduction of 5G requiring a high transmission rate, base stations are required to have more antennas and provide a service through a broader bandwidth and a wider frequency band. Thus, according to a study, the energy cost of base stations has reached about 20% of total OPEX. As the energy saving of base stations draws more attention than ever, 3GPP NR release 18 approves a new study item (SI) titled "study on network energy savings".

Specifically, enhancement techniques for improving energy saving capability, that is, network energy saving, are being considered in terms of the transmission and reception of a base station. For example, through one or more network energy saving techniques, methods under current consideration aim to achieve efficient operations dynamically and/or semi-statically and achieve finer granularity adaptation of transmission and/or reception in potential support/feedback from a user equipment and time, frequency, space and power domains using potential UE support information.

For NES, a base station may control on/off during a predetermined duration on time axis, control a transmission/reception resource for a UE-common or UE-specific signal/channel, change a frequency-axis resource amount, control transmission power, or operate on/off techniques for an antenna port or transmission reception point (TRP) in spatial domain. Hereinafter, in the present disclosure, a state, to which the above-described NES-related technique(s) (hereinafter, 'NES tech') is applied, will be referred to as an NES mode or an NES state. Hereinafter, in the present disclosure, according to Approach 1, a base station may inform a terminal of whether each NEX tech is applied or which NES tech is applied according to each NEX tech group. Alternatively, according to Approach 2, a base station may configure an NES tech(s) or an NES tech group(s) corresponding to each code-point of a specific indicator (e.g., indicator indicated through DCI or MAC CE, indicator configured through higher layer signaling).

In Approach 1, when at least one NES tech is applied, a terminal may define a corresponding state as an NES mode or an NES state. Alternatively, depending on which NES tech is applied, the terminal may define the application of a different NES mode or a different NES state. In Approach 2, the terminal may define a corresponding state according to an NES tech linked to an indicator. For example, when a 1-bit indicator is used, no NES tech is linked to '0', and one or more NES techs are linked to '1', if an indicator with a value of 1 is received, the terminal may define the state as an NES mode or an NES state. As another example, when a 2-bit indicator is used, no NES tech is linked to '00', one or more NES techs_A are linked to '01', one or more NES techs_B are linked to '10', and one or more NES techs_C are linked to '11', if an indicator with a code point other than '00' is received, the terminal may the state as an NES mode or an NES state. Herein, if '01' is received, the terminal defines an NES state#1, if '10' is received, the terminal defines an NES state#2, if '11' is received, the terminal defines an NES state#3, and thus the terminal may identify for each code-point whether or not it is an NES state or which NES state it corresponds to.

Meanwhile, a base station may operate a plurality of frequency bands and/or a plurality of carriers (or serving cells). Accordingly, a serving cell corresponding to a frequency F1 may operate as a PCell for a first terminal (UE#1), and a serving cell corresponding to a frequency F2 may operate as a PCell for a second terminal (UE#2). In this case, the base station should periodically transmit an SSB and/or an SIB1 through F1 and F2 in order to operate the two serving cells as PCell. However, when there is no data to be transmitted and/or received by the first terminal (UE#1) and the second terminal (UE#2) or there is only a small amount of data to be transmitted and/or received, operation of only one serving cell of the serving cells corresponding to F 1 or F2 may be advantageous in terms of energy saving of the base station. That is, if the PCell of the second terminal (UE#2) is changed to a serving cell corresponding to F1 not F2, the energy of the base station may be saved.

Accordingly, the present disclosure proposes a method for dynamically changing a PCell. Hereinafter, for convenience of description, a serving cell, which operates as an existing PCell, may be referred to as a PCell_old, and a serving cell, which operates as a new PCell under a PCell change indication of a base station, may be referred to as a PCell_new.

According to an embodiment of the present disclosure, as illustrated in FIG. 20, PCell change-related information may be dynamically signaled. FIG. 20 illustrates an example of a PCell change indication procedure in a wireless communication system according to an embodiment of the present disclosure. FIG. 20 exemplifies signal exchange between a terminal 2010 and a base station 2020.

Referring to FIG. 20, at step S2001, the base station 2020 transmits indication information related to a PCell change to the terminal 2010. For example, the base station 2020 may transmit indication information related to the PCell change dynamically through DCI or MAC CE.

At step S2003, the terminal 2010 changes a PCell based on the indication information related to the PCell change. That is, the terminal 2010 may change the PCell from a PCell_old to a PCell_new and perform at least some functions of the functions or operations, which were performed in the existing PCell_old, in the PCell_new. According to an embodiment, the at least some functions may include at least one of a function of monitoring a PDCCH in a CCS set, a function related to a random access procedure, or a PUCCH transmission function. For example, by changing the PCell from the PCell_old to the PCell_new, the terminal 2010 may not monitor a PDCCH, which is configured to be monitored in a CSS set of the PCell_old, but a PDCCH that is configured to be monitored in a CSS set of the PCell_new.

[Embodiment#1] An example of signaling PCell change

A base station may indicate a PCell change to a terminal through DCI or MAC CE. The DCI or MAC CE indicating the PCell change may be delivered UE-specifically, UE group-commonly or cell-specifically. The DCI may be delivered after being scrambled with an identifier (e.g., radio network temporary identifier (RNTI)) that is configured UE-specifically, UE group-commonly or cell-specifically. The MAC CE may be delivered through a PDSCH that is scheduled in the DCI that is scrambled with the identifier configured UE-specifically, UE group-commonly or cell-specifically. According to an embodiment, a bit location in the MAC CE, in which the PCell change is indicated, may be configured in advance.

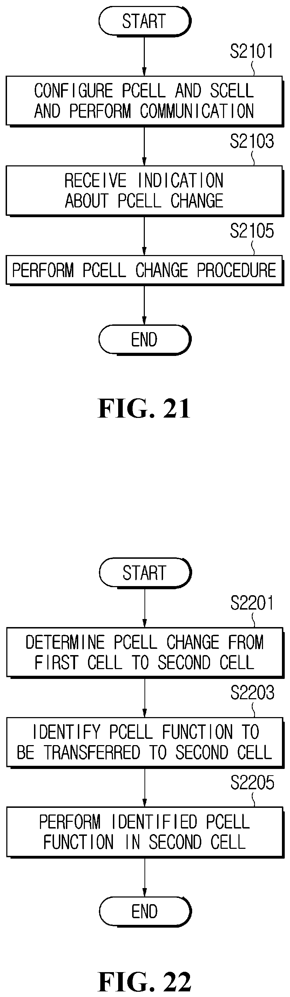

FIG. 21 illustrates an example of a procedure of changing a PCell in a wireless communication system according to an embodiment of the present disclosure. FIG. 21 exemplifies a method for operating a terminal.

Referring to FIG. 21, at step S2101, a terminal configures a PCell and an SCell and performs communication. That is, the terminal may perform a random access procedure with a base station, configure an initial serving cell of the base station as a PCell for carrier aggregation, and add at least one different serving cell as an SCell. Accordingly, the terminal may perform communication by using a plurality of cells including the PCell and the SCell.

At step S2103, the terminal receives an indication about a PCell change. That is, the terminal may receive the indication about the PCell change through DCI or MAC CE. For example, the PCell change may be indicated by using DCI indicating PUCCH cell switching, a PDCCH order, an SPS/CG configuration, or an NES state.

At step S2105, the terminal performs a PCell change procedure. That is, the terminal may perform a procedure for changing the PCell from a first cell to a second cell based on the indication about the PCell change. Herein, the second cell may be or not be one of serving cells of the terminal. The procedure for changing the PCell may include at least one operation for performing at least some of functions performed in the first cell in the second cell.

In case the PCell is indicated by using DCI, at least one of the following embodiments may be applied.

[Embodiment #1-1] As described in Table 13 below, DCI indicating PUCCH cell switching may be used to indicate a PCell change. As an example, an indicator indicating PUCCH cell switching may be configured in a DCI format (e.g., DCI format 1_1 or DCI format 1_2). In case the indicator is '0', a terminal may transmit a PUCCH through a PCell, and in case the indicator is '1', the terminal may transmit the PUCCH through a preconfigured PUCCH-sSCell. According to an embodiment of the present disclosure, in case a PUCCH cell switching indicator configured in a corresponding DCI format is used to indicate a PCell, the terminal may determine, based on the PUCCH cell switching indicator, a cell in which at least some functions of the PCell are to be performed. For example, in case the PUCCH cell switching indicator is '0', the terminal may retain all functions of PCell in an existing PCell, and in case the PUCCH cell switching indicator is '1', the terminal may perform at least some functions of PCell in a preconfigured PUCCH-sSCell. Whether or not a PUCCH cell switching indicator is available as PCell change indication information may be configured in advance through higher layer signaling. Alternatively, the terminal may determine whether or not the PUCCH cell switching indicator is used as PCell change indication information, based on whether or not it is in an NES state. For example, in case of the NES state, the terminal may determine that the PUCCH cell switching indicator is available as PCell change indication information, and perform a PCell change function according to the PUCCH cell switching indicator.

Table 13 is an excerpt from TS 38.213 v17.3.0 describing a PUCCH cell switching-related procedure.

[Table 13]

| |
|---|
| 9.A PUCCH cell switching<br>This clause is applicable when a UE is provided a PUCCH-sSCell by *pucch-sSCell* and the PUCCH-sSCell is activated and does not have a dormant UL/DL active BWP.<br>A UE can be provided a periodic cell switching pattern for PUCCH transmissions by *pucch-sSCellPattern.* Each bit of the pattern corresponds to a slot for a reference SCS configuration provided by *tdd-UL-DL-ConfigurationCommon* for the PCell with a value of '0' or a value of '1' indicating, respectively, the PCell or the PUCCH-sSCell as the cell for PUCCH transmissions during the slot of the reference SCS configuration. The UE does not transmit a PUCCH in a slot on a cell if the pattern indicates a different cell for PUCCH transmission during the slot. A slot on the active UL BWP of the PUCCH-sSCell does not overlap with more than one slot on the active UL BWP of the PCell. If a slot for the active UL BWP of the PCell overlaps with more than one slot on the active BWP of the PUCCH-sSCell and the UE would transmit a PUCCH on the PUCCH-sSCell, the UE considers the first of the overlapping slots for the PUCCH transmission on the PUCCH-sSCell.<br>If a UE is provided *pucch-sSCellDyn* or *pucch-sSCellDynDCI-1-2,* a corresponding DCI format associated with generation of HARQ-ACK information by the UE can include a PUCCH cell indicator field [5, TS 38.212] with a value of '0' or a value of '1' indicating, respectively, whether a PUCCH transmission with the HARQ-ACK information by the UE is on the PCell or on the PUCCH-sSCell. When the UE transmits a PUCCH with HARQ-ACK information that is associated only with SPS PDSCH receptions, the UE transmits the PUCCH on the PCell. The UE does not expect the PUCCH cell indicator<br>field to indicate the PUCCH-sSCell for a PUCCH transmission in a slot that overlaps with a slot on the PCell where the UE would transmit another PUCCH of same or different priority index.<br>A UE transmits a PUCCH on a PUCCH-sSCell with a power that the UE determines as described in clause 7.2.1, where the UE applies<br>   - a *p0-PUCCH-Value* from *pucch-PowerControl* in *PUCCH-Config* for the PUCCH-sSCell for the determination of $P_{O,PUCCH,b,f,c}(q_u)$<br>   - a *pucch-PathlossReferenceRS-Id* from *pucch-PowerControl* in *PUCCH-Config* for the PUCCH-sSCell for the determination of $PL_{b,f,c}(q_d)$ |

(continued)

- a PUCCH power control adjustment state $g_{b,o,c}(i, 0)$ for active UL BWP $b$ of the UL carrier of PUCCH-sSCell c and PUCCH transmission occasion i where $\delta_{PUCCH,b,0,c}(i, 0)$ is a TPC command value included in a DCI format associated with generation of HARQ-ACK information for multiplexing in a PUCCH transmission on the PUCCH-sSCell as indicated either by a *pucch-sSCellPattern* or by a PUCCH cell indicator field in the DCI format, or provided by DCI format 2_2 with CRC scrambled by TPC-PUCCH-RNTI for the PUCCH-sSCell as described in clause 11.3

[Embodiment #1-2] A PDCCH order may be used to indicate a PCell change. For example, a PDCCH order indicating initiation of a random access process may be used to indicate a PCell change. The random access procedure may be initiated by a PDCCH order, when the DCI format 1_0 is scrambled with C-RNTI and frequency domain resource assignment (FDRA) fields are all 1. As an example, a PCell change may be indicated through a bit (or bits) of a specific field of the PDCCH order, a code-point, or a combination of code-points. For example, a random access preamble index field, a UL/SUL indicator field, an SS/PBCH index field, a PRACH mask index field, or a reserved bit field may be used to indicate the PCell change. In this case, a terminal may receive a PUCCH configuration of a PCell_new to be changed through higher layer signaling (e.g., handover command) and transmit a PUCCH in the PCell_new as a response to the reception of the PDCCH order. That is, as a response to the reception of the PDCCH order, the terminal does not transmit a PRACH but the PUCCH, thereby informing a base station of the PCell change.

[Embodiment #1-3] In case activation is indicated for an SPS/CG configuration with a specific index in a PCell or SCell, a PCell change may be performed. The specific index may be predefined or set by higher layer signaling. For example, the specific index may be predefined as a lowest configuration index or a higher configuration index.

[Embodiment #1-4] In case an NES state or a specific NES state is indicated, a PCell change may be performed. Alternatively, in case a specific DRX configuration (e.g., cell-specific DTX and/or DRX configuration) is activated among a plurality of DRX configurations (e.g., cell-specific DTX and/or DRX configurations) that are set, a PCell change may be performed. When an NES state is indicated, the PCell may be performed. Alternatively, in case switching to a specific BWP is performed in a PCell or SCell, a PCell change may be performed. For example, in case switching from BWP#1 to BWP#2 is performed in a PCell, an existing PCell of the terminal may become a PCell_old, and a pre-configured existing SCell may change to a PCell_new.

In the above-described embodiments and embodiments described below, PCell may be replaced by PSCell. That is, in the present disclosure, PCell may be understood as PSCell, and embodiments proposed herein may also be applied to a change of PSCell.

Through the PCell change indication proposed in Embodiment #1-1 to Embodiment #1-4, a certain SCell belonging to an SCG may be dynamically changed from a PCell to a PSCell. In the above-described embodiments, there may be a plurality of candidate SCells capable of being changed to a PCell. Herein, all serving cells except the PCell may be included in the candidate SCells, or some serving cells may be included in the candidate SCells. Whether or not each serving cell is included in a candidate SCell may be set and/or indicated by a base station. For example, during a procedure for adding an SCell, whether or not it is a candidate SCell for a PCell change may be indicated. In case a plurality of candidate SCells are configured, one of the plurality of candidate SCells may be indicated through DCI or MAC CE, and thus the indicated one SCell may be changed to a PCell.

When DCI or MAC CE indicating a PCell change is received, a terminal may perform a PCell change operation after a certain time. That is, the terminal delays application for the certain time after DCI or MAC CE indicating the PCell change is received, and then the terminal may perform the PCell operation. For example, in K1 symbols after a time when DCI or MAC CE indicating the PCell change is received, the terminal may perform the PCell change operation in a nearest slot after the K1 symbols or in a nearest slot-group boundary after the K1 symbols. As another example, in K2 msec after HARQ-ACK feedback corresponding to the DCI or MAC CE indicating the PCell change is transmitted, the terminal may perform the PCell change operation in a nearest slot after the K2 msec or in a nearest slot-group boundary after the K2 msec. Herein, a certain time for delaying a PCell change operation such as K1 symbols or K2 msec may be predefined or configured or be configured by a terminal (or UE) capability signaling report. The certain time may be set in a unit of symbol, slot or msec.

According to an embodiment, a timer value for a PCell change operation may be set and/or defined in advance. A terminal may operate a timer at a time when a PCell is changed from PCell_old to PCell_new, and when the timer value expires, the terminal may change the PCell from PCell_new to PCell_old again.

[Embodiment #2] An example of performing at least some functions of functions of an existing PCell, when changing PCell.

A PCell may be temporarily changed in consideration of traffic load. That is, as the amount of traffic load may vary over time, the PCell may be temporarily changed from PCell_old to PCell _new, when the amount of load is small, and then return to the existing PCell_old. In this case, much higher layer signaling may be required to transfer all functions of PCell from PCell_old to PCell_new and then return the functions back to PCell_old. In addition, this may result in increase of latency so that a significant change in the operation of a terminal may be required. Accordingly, in case a PCell is changed according to the above-described Embodiment #1, only some functions of the functions performed or supportable in PCell_old may be performed in PCell_new. For example, as shown in Embodiment #2-1 to Embodiment #2-3 below, at least some of functions, which can be performed in PCell_old, may be performed in PCell_new.

FIG. 22 illustrates an example of a procedure of transferring at least some functions of a PCell in a wireless communication system according to an embodiment of the present disclosure. FIG. 22 exemplifies a method for operating a terminal.

Referring to FIG. 22, at step S2201, a terminal determines a PCell change from a first cell to a second cell. That is, by receiving an indication about the PCell change from a base station, the terminal may determine that a PCell is to be changed from the first cell to the second cell. The indication about the PCell change may be performed through at least one of the signalings described in Embodiment #1.

At step S2203, the terminal identifies a PCell function to be transferred to the second cell. That is, the terminal may identify at least one PCell function to be performed in the second cell, which is a new PCell (e.g., PCell_new), among PCell functions performed in the first cell, which is an existing PCell (e.g., PCell_old), and/or PCell functions configured to be operated in the first cell. A PCell function to be transferred to the second cell may be determined based on a pre-configured rule or an indication of a base station (e.g., higher layer signaling or indication based on DCI).

At step S2205, the terminal performs the identified PCell function in the second cell. That is, by transferring the PCell function from the first cell to the second cell, the terminal may perform the PCell function in the second cell. Herein, the terminal may perform signaling necessary to transfer the identified PCell function from the first cell to the second cell. Herein, remaining PCell functions except the identified PCell function may still be performed in the first cell. That is, among PCell functions operated in the first cell and/or PCell functions configured to be operated in the first cell, the remining PCell functions except at least one PCell function transferred to the second cell may be maintained to be operated in the first cell. Alternatively, according to another embodiment, the remaining PCell functions except the identified PCell function may not be performed in the first cell, and the terminal may not perform signal transmission and reception through the first cell.

In the embodiment described with reference to FIG. 22, at least one identified function is transferred to a second cell, and at least one remaining function is provided in a first cell. According to another embodiment, at least one identified function may be transferred to the second cell, some of at least one remaining function may be provided in the first cell, and at least one remaining function may be suspended. By suspending at least one function, energy saving efficiency may be improved. Herein, the at least one suspended function may be predefined or be set or indicated by a base station. At least one suspended function may be configured and/or indicated in advance during a carrier aggregation configuration procedure or be set and/or indicated together with an indication about a PCell change. For example, according to an embodiment, a paging function may be suspended.

As in the embodiment described with reference to FIG. 22, only some functions may be transferred to a PCell_new because of a PCell change. At least one function thus transferred may be defined in various ways according to specific embodiments. In addition, at least one function thus transferred may be indicated to a terminal by being predefined or being set or signaled by a base station. Specifically, the following functions may be transferred to a PCell_new.

[Embodiment #2-1] PDCCH monitoring function

Among PDCCH monitorings performed or configured to be performed in a PCell_old, all or some of the monitorings may be performed in a PCell_new. Specifically, a PDCCH monitoring function for a specific type of CCS set, a specific DCI format and/or a specific SS set index (e.g., SS set index 0) may be controlled to be performed in the PCell_new instead of the PCell_old. Herein, the specific type of CCS set may include at least one of Type0-PDCCH CSS set, Type0A-PDCCH CSS set, Type0B-PDCCH CSS set, Type1-PDCCH CSS set, Type1A-PDCCH CSS set, Type2-PDCCH CSS set, Type2A-PDCCH CSS set, or Type3-PDCCH CSS set, which are defined in TS 38.213. Alternatively, the specific DCI format may include at least one of DCI format 0_0, DCI format 1_0, DCI format 2_X, or DCI format 4_X.

Among PDCCH monitorings performed or configured to be performed in a PCell_old, some PDCCH monitorings to be performed in a PCell_new instead of a PCell_old may be predefined or be set by higher layer signaling. For example, a type of CSS set, a DCI format and an SS set index, for which PDCCH monitoring is performed in the PCell_new, may be predefined or be set by higher layer signaling.

According to an alternative embodiment #2-1-1, when PDCCH monitoring for a specific CSS set(s) is performed in a PCell_new, settings related to the PDCCH monitoring for the specific CSS set(s) may be set according to each serving cell. The settings related to the PDCCH monitoring for the specific CSS set(s) may include settings for a monitoring pattern for a corresponding CCS set, a CORESET index and/or the number of PDCCH candidates at each aggregation level. Herein, the monitoring pattern for the corresponding CSS set may include at least one of a periodicity, an offset and a symbol location of a PDCCH occasion within a slot.

According to an alternative embodiment #2-1-2, when PDCCH monitoring for a specific CSS set(s) is performed in a PCell_new, a setting related to PDCCH monitoring for a pre-configured specific CSS set(s) in a PCell_old may be inherited to the PCell_new.

In the alternative embodiment #2-1-2, to minimize ambiguity likely to occur due to application of a monitoring pattern, a constraint may be applied to the effect that a PCell_new and a PCell_old should have a same SCS and/or duplex mode (e.g., FDD or TDD). Alternatively, irrespective of the alternative embodiment, for a target SCell to be changed to a PCell, a constraint may be applied to the effect that a PCell_new and a PCell_old should have a same SCS and/or duplex mode (e.g., FDD or TDD). Alternatively, by SS set index linkage between a PCell_new and a PCell_old, a PCell function for PDCCH monitoring may be performed in a PCell_new. For example, in case the PCell_new and the PCell_old have a predefined or pre-configured linkage relationship, a terminal may perform PDCCH monitoring in the PCell_new by replacing a setting for an SS set index n of the PCell_old by at least some settings for an SS set index m of the PCell_new. The linkage relationship between the SS set index n of the PCell_old and the SS set index m of the PCell_new may be pre-configured, or when n=m, be automatically set.

[Embodiment #2-2] A function related to a random access procedure

At least some functions related to a random access procedure may be performed in a PCell_new. For example, at least a portion of HARQ-ACK transmission corresponding to msg1/2/3/4 and msg4 of a 4-step RACH procedure and HARQ-ACK transmission corresponding to msgA/B and msgb of a 2-step RACH procedure may be performed in the PCell_new.

According to an alternative embodiment #2-2-1, when PRACH (or msgA) transmission is performed in a PCell_new, a setting for a corresponding PRACH (or msgA) transmission resource may be set according to each serving cell. According to an alternative embodiment #2-2-2, when PRACH (or msgA) transmission is performed in a PCell_new, a setting for a corresponding pre-configured PRACH (or msgA) transmission resource in a PCell_old may be inherited to a PCell_new.

[Embodiment #2-3] PUCCH transmission function

At least some transmissions of PUCCH transmissions may be performed in a PCell_new. That is, at least some transmissions of transmissions for a PUCCH, which are periodically and/or semi-statically indicated for transmission of an SR and/or CSI, and/or transmissions for the PUCCH, which are aperiodically indicated for transmission of HARQ-ACK, may be performed in the PCell_new. According to an alternative embodiment #2-3-1, when PUCCH transmission is performed in a PCell_new, a setting for a corresponding PUCCH transmission resource may be set according to each serving cell. According to an alternative embodiment #2-3-2, when PUCCH transmission is performed in a PCell_new, a setting for a corresponding pre-configured PUCCH transmission resource in a PCell_old may be inherited to the PCell_new.

Among the above-described functions (or operations) performed in a PCell_old, at least some functions to be performed in a PCell _new may be configured by higher layer signaling. According to an embodiment, among functions performed in a PCell_old, some K candidate functions may be configured by higher layer signaling, and at least one operation to be actually performed in a PCell_new among K operations may be dynamically indicated in the same way as proposed by Embodiment #1.

According to an embodiment, a terminal may perform some functions of a PCell_old in a PCell_new only for a certain time (e.g., T1 slot or T2 msec) after a time when a PCell is changed from the PCell_old to the PCell_new according to a PCell change indication and perform all functions of the PCell_old in the PCell_new after the certain time elapses.

[Embodiment #3] An example of a PCell change when an SCell to be operated as a PCell _new is deactivated or dormant

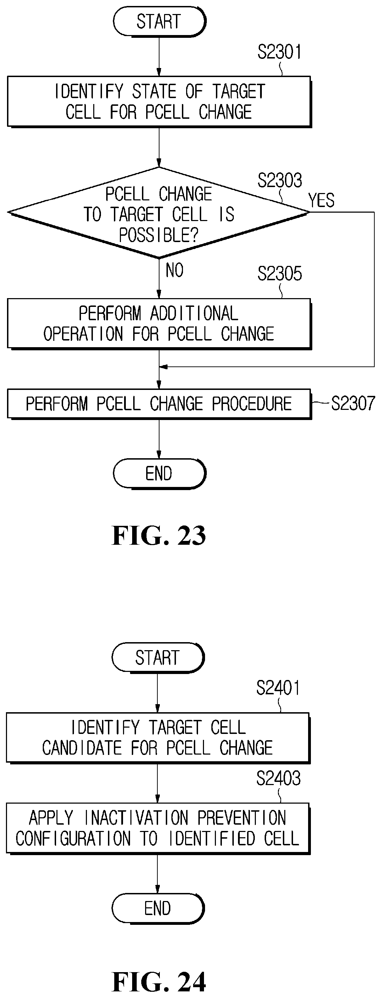

FIG. 23 illustrates an example of a procedure of changing a PCell based on a state of a target cell in a wireless communication system according to an embodiment of the present disclosure. FIG. 23 exemplifies a method for operating a terminal.

Referring to FIG. 23, at step S2301, a terminal identifies a state of a target cell for a PCell change. That is, the terminal may determine a target cell to be operated as a PCell _new among a plurality of SCells configured for carrier aggregation and identify a state of the determined target cell. The target cell to be operated as the PCell _new may be an SCell indicated to be operated as a PCell through DCE or MAC CE, as described Embodiment #1. Herein, the state of the target cell may include a state showing whether or not the target cell is activated and/or whether or not the target cell is dormant. For example, if the target cell is a cell that is operated in an inactive BWP or a dormant BWP, the terminal may determine that the state of the target cell is a deactivated state.

At step S2303, the terminal determines whether or not the PCell change is possible by the target cell. If a state of the target cell is a deactivated state or an active BWP in the target cell is dormant, the terminal determines that the PCell change to the target cell is impossible. On the other hand, if the state of the target cell is an activated state and the active BWP is not dormant, the terminal determines that the PCell change to the target cell is possible.

When the PCell change to the target cell is not possible, at step S2305, the terminal performs an additional operation for the PCell change. For example, the terminal may perform an operation for changing the state of the target cell or selecting a new target cell. To this end, the terminal may transmit and/or receive at least one message or signal to and/or from a base station. According to an embodiment, the terminal may perform BWP switching to a BWP not in dormant state among BWPs configured in the target cell. A BWP not in deactivation state or dormant state may be configured in advance. According to another embodiment, the terminal may select another SCell not in deactivation state as a target cell. For example, among SCells included in a same CG or PUCCH group as a PCell, the terminal may select an SCell with a designated serving cell index as a new target cell. The designated serving cell index may be a lowest serving cell index, a highest serving cell index, or a pre-configured serving cell index.

At step S2307, the terminal performs a PCell change procedure. That is, in case the additional operation is performed at step S2305, the terminal may change the PCell in a switched BWP or change the PCell to another SCell. Alternatively, in case it is determined at step S2303 that the PCell change to the target cell is possible, the terminal may change the PCell from an existing PCell_old to the target cell. Thus, the target cell may become a PCell_new of the terminal.

In the description referring to FIG. 23, in case the PCell change to the target cell is impossible, the terminal performs the additional operation for the PCell change and then performs the PCell change procedure. However, according to an embodiment, the terminal may not perform any PCell change procedure but maintain an existing PCell_old. That is, in case a PCell change target cell is in deactivation state, the terminal may not change a PCell but perform the function of the PCell in the existing PCell_old.

FIG. 24 illustrates an example of a procedure of preventing inactivation of a PCell change target cell in a wireless communication system according to an embodiment of the present disclosure. FIG. 24 exemplifies a method for operating a terminal.

Referring to FIG. 24, at step S2401, a terminal identifies a target cell candidate for a PCell change. According to an embodiment, the target cell candidate for the PCell change may be indicated by a base station through DCI or MAC CE. According to an embodiment, the target cell candidate for the PCell change may be determined during an SCell configuration procedure.

At step S2403, the terminal applies an inactivation prevention configuration of the identified target cell candidate. That is, the terminal may constrain the identified target cell candidate from being subject to transition to an inactive state. For example, in order to constrain the identified target cell candidate from being subject to transition to the inactive state, the terminal may not operate a timer related to inactivation of an SCell. The timer related to the inactivation of the SCell may be configured not to operate through data scheduling DCI of DCI format 2_6 or DCI format 0_1/0_2/1_1/1_2. As another example, in order to prevent the target cell candidate from being subject to transition to the inactive state, the terminal may ignore a transition indication to the inactive state for the target cell candidate.

In the description referring to FIG. 24, the terminal constrains the target cell candidate from being subject to transition to the inactive state, but the present disclosure is not limited thereto. For example, the terminal may constrain the target cell candidate from being subject to transition to a dormant state. The transition to the dormant state may be constraint by prohibiting a dormancy-related timer from being operated or by ignoring a transition indication to the dormant state.

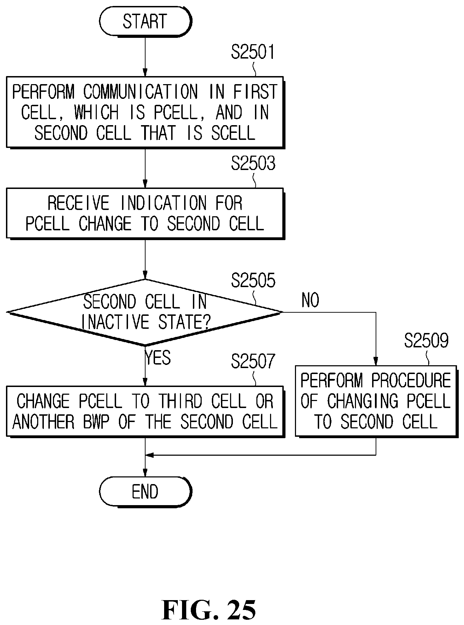

FIG. 25 illustrates an example of a procedure of changing a PCell in a wireless communication system according to an embodiment of the present disclosure. FIG. 25 exemplifies a method for operating a terminal.

Referring to FIG. 25, at step S2501, a terminal performs communication in a first cell, which is a PCell, and in a second cell that is an SCell. That is, the terminal may perform a random access procedure with a base station, configure a first cell as the PCell among serving cells of the base station, and configure at least one second cell as the SCell. Herein, the first cell may be a cell in which the random access procedure is performed, and the at least one second cell may be a cell belonging to a same cell group as the first cell, that is, a main cell group (MCG), or a cell belonging to a secondary cell group (SCG) that is a different cell group. The terminal may perform communication through the first cell, which is the PCell, and the second cell that is the SCell.

At step S2503, the terminal receives an indication for a PCell change to the second cell. That is, the terminal may receive information indicating that the PCell is to be changed from the first cell to the second cell, through DCI or MAC CE. For example, as described in Embodiment #1, the terminal may receive an indication for the PCell change through DCI, a PUCCH order, an SPS/CG configuration, or an NES state, which indicate PUCCH cell switching.

At step S2505, the terminal determines whether or not the second cell is in inactive state. That is, the terminal may determine whether or not the second cell, which is the target cell of the PCell change, is in inactive state. If the second cell is in inactive state, the terminal proceeds to step S2507 below. Alternatively, the terminal may also proceed to step S2507, when a BWP used for an SCell in the second cell is a dormant BWP.

In case the second cell is in inactive state, at step S2507, the terminal changes the PCell to a third cell or another BWP of the second cell. That is, in case the second cell is in inactive state, the terminal may change the PCell to the third cell that is not in inactive state. Herein, the third cell may be an SCell with a lowest serving cell index or a highest serving cell index or an index of a designated value among SCells within a same CG or PUCCH group as the first cell. Alternatively, in case an active BWP for SCell in the second cell is dormant, the terminal may perform BWP switching to another BWP not in dormant state and change the PCell to the second cell. Herein, the another BWP is a BWP not in dormant state and may be set in advance. Next, the terminal may perform at least some functions of all functions of the PCell performed or configured to performed in the first cell in the another BWP of the second cell or in the third cell.

In case the second cell is not in inactive state, at step S2507, the terminal performs a procedure of changing the PCell to the second cell. That is, the terminal may change the PCell from the first cell to the second cell. Next, the terminal may perform at least some functions of all the functions of the PCell performed or configured to performed in the first cell in the second cell.

[Embodiment #4] When both a primary DRX group and a secondary DRX group of a terminal are configured, if a frequency range (FR), to which a PCell_old belongs, and an FR, to which a PCell_new belongs, are different from each other, a DRX group configuration may be changed. For example, in case the PCell_new belongs to the secondary DRX group before a PCell change, a secondary DRX group configuration after the PCell group may not be applied, and a primary DRX group configuration may be commonly applied to every serving cell. As another example, in case the PCell_new belongs to the secondary DRX group before the PCell change, primary DRX group configuration parameters may be applied to serving cells corresponding to the FR, to which the PCell_new belongs, and secondary DRX group configuration parameters may be applied to serving cells corresponding to the FR, to which the PCell_old belongs. In this case, there may be an advantage in that a configuration of a DRX group to which the PCell belongs is maintained as a configuration of the primary DRX group before and after the PCell change.

As described above, the present disclosure proposes a dynamic change of a PCell of a terminal through PCell change indication signaling and an operation of the terminal related to PDCCH monitoring, a random access procedure, PUCCH transmission or DRX according to the PCell change, thereby saving energy of a base station.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

Industrial Applicability

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1. A method for operating a terminal in a wireless communication system, the method comprising:

   performing a random access procedure with a base station;
   configuring a first cell as a primary cell (PCell) among cells of the base station;
   configuring a second cell as a secondary cell (SCell) among the cells of the base station;

receiving an indication to change the PCell to the second cell; and

based on the second cell being in inactive state or an active bandwidth part (BWP) of the terminal being dormant in the second cell, changing the PCell to a third cell different from the second cell or changing the PCell to the second cell after switching the active BWP.

2. The method of claim 1, wherein the indication to change the PCell to the second cell is received based on at least one of downlink control information (DCI) indicating physical uplink control channel (PUCCH) cell switching, a physical downlink control channel (PDCCH) order, an SPS/configured scheduling (CG) configuration of a specific index, or a network energy saving (NES) state.

3. The method of claim 1, further comprising:

transferring at least some functions of functions of the PCell from the first cell to the second cell.

4. The method of claim 3, wherein the at least some functions comprises at least one of a function of monitoring a PDCCH in a common search space (CSS) set, a function related to a random access procedure, or a PUCCH transmission function.

5. The method of claim 3, wherein the at least some functions are indicated based on at least one of higher layer signaling or DCI.

6. The method of claim 1, wherein a primary DRX group configuration is applied to at least one of another BWP of the second cell, to which the PCell is changed, or the third cell.

7. The method of claim 6, wherein after the PCell is changed, a secondary DRX group configuration is applied to the first cell.

8. The method of claim 1, further comprising:

identifying at least one target cell candidate capable of changing to the PCell; and

constraining transition to inactive state for the at least one target cell candidate.

9. The method of claim 8, wherein the constraining of the transition to the inactive state is performed based on at least one of prohibition of operation of a timer related to inactivation or ignorance of an indication of the transition to the inactive state.

10. The method of claim 1, wherein the changing of the PCell is performed after a predefined or configured time elapses from a time when the indication to change the PCell to the second cell is received.

11. The method of claim 1, further comprising, after changing the PCell to the second cell or the third cell, changing the PCell to the first cell based on expiration of a timer that started running due to the changing of the PCell.

12. A method for operating a base station in a wireless communication system, the method comprising:

performing a random access procedure with a terminal;

configuring a first cell as a primary cell (PCell) of the terminal among cells of the base station;

configuring a second cell as a secondary cell (SCell) of the terminal among the cells of the base station; and

transmitting an indication to change the PCell to the second cell to the terminal.

13. A terminal in a wireless communication system, the terminal comprising:

a transceiver; and

a processor coupled with the transceiver,

wherein the processor is configured to:

perform a random access procedure with a base station,

configure a first cell as a primary cell (PCell) among cells of the base station,

configure a second cell as a secondary cell (SCell) among the cells of the base station,

receive an indication to change the PCell to the second cell, and

based on the second cell being in inactive state or an active bandwidth part (BWP) of the terminal being dormant in the second cell, change the PCell to a third cell different from the second cell or change the PCell to the second cell after switching the active BWP.

14. A base station in a wireless communication system, the base station comprising:

a transceiver; and
a processor coupled with the transceiver,
wherein the processor is configured to:

perform a random access procedure with a terminal,
configure a first cell as a primary cell (PCell) of the terminal among cells of the base station,
configure a second cell as a secondary cell (SCell) of the terminal among the cells of the base station, and
transmit an indication to change the PCell to the second cell to the terminal.

15. A communication device comprising:

at least one processor; and
at least one computer memory coupled with the at least one processor and storing an instruction that instructs operations when executed by the at least one processor,
wherein the operations comprise:

performing a random access procedure with a base station;
configuring a first cell as a primary cell (PCell) among cells of the base station;
configuring a second cell as a secondary cell (SCell) among the cells of the base station;
receiving an indication to change the PCell to the second cell; and
based on the second cell being in inactive state or an active bandwidth part (BWP) of the terminal being dormant in the second cell, changing the PCell to a third cell different from the second cell or changing the PCell to the second cell after switching the active BWP.

16. A non-transitory computer-readable medium storing at least one instruction, the non-transitory computer-readable medium comprising the at least one instruction that is executable by a processor,
wherein the at least one instruction controls a device to:

perform a random access procedure with a base station,
configure a first cell as a primary cell (PCell) among cells of the base station,
configure a second cell as a secondary cell (SCell) among the cells of the base station,
receive an indication to change the PCell to the second cell, and
based on the second cell being in inactive state or an active bandwidth part (BWP) of the terminal being dormant in the second cell, change the PCell to a third cell different from the second cell or change the PCell to the second cell after switching the active BWP.

**FIG. 1**

**FIG. 2**

Radio Frame 10ms

Subframe 1ms

| 0 | 1 | 2 | 3 | 4 | 5 | 6 | 7 | 8 | 9 |

Fixed Size

Subframe={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbol

**FIG. 3**

One Subframe

$14 \cdot 2^{\mu}$ OEDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

**FIG. 4**

**FIG. 5**

Resource grid

A carrier
(up to 3300 subcarriers, i.e, 275 RBs)

A BWP

1 RB=12 subcarrier

1 RE

1 subcarrier

1 symbol

l=0 ・・・

k=0

**FIG. 6**

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S701

S702

S703

S704

S705

S706

S707

S708

• DL/UL ACK/NACK
• UE CQI/PMI RI REPORT
  USING PUSCH AND PUCCH

**FIG. 7**

FIG. 8

**FIG. 9**

SSB periodicity(default:20ms)

5ms
window

SSB#1    SSB#2    • • •    SSB#L

SSB busrt set

**FIG. 10**

**FIG. 11**

EP 4 598 126 A1

SFN | SSB time index

| s9, s8, s7, s6, s5, s4, s3, s2, s1, s0 | c0 | b5, b4, b3 | b2, b1, b0 |

Half frame boundary

PBCH payload · DMRS

**FIG. 12**

UE | Cell(e.g., BS)

MasterInformationBlock

SystemInformationBlockType1

System Information Request

SystemInformation messages

**FIG. 13**

**FIG. 14**

Bitmap in Group
(8bits)

| SSB#0 | SSB#1 | SSB#2 | SSB#3 | SSB#4 | SSB#5 | SSB#6 | SSB#7 |
|-------|-------|-------|-------|-------|-------|-------|-------|

Group-Bitmap
(8bits)

| Group#0 | Group#1 | Group#2 | Group#3 | Group#4 | Group#5 | Group#6 | Group#7 |
|---------|---------|---------|---------|---------|---------|---------|---------|

# FIG. 15

UE                                                              BS

random access preamble ⟶ S710

random access response ⟵ S720

scheduled transmission ⟶ S730

contention resolution ⟵ S740

# FIG. 16

UE                                                    BS

RA preamble assignment ——————— S810

random access preamble ——————— S820

random access response ——————— S830

# FIG. 17

BS                                                    UE

PSS/SSS
PBCH ——————— S1802

RMSI+OSI ——————— S1804

RACH preamble(Msg1) ——————— S1806

RAR(Msg2) ——————— S1808

Msg3 ——————— S1810

Msg4 ——————— S1812

SS Block/CSI-RS ——————— S1814

DCI ——————— S1816

PUSCH/PUCCH ——————— S1818

S1820a                                                S1820b

# FIG. 18

On Duration | Opportunity for DRX

UE shall monitor
PDCCH

DRX Cycle

## FIG. 19

BASE STATION
(2020)

TERMINAL
(2010)

INDICATION RELATED TO
PCELL CHANGE(S2001)

S2003 — CHANGE PCELL

## FIG. 20

START

CONFIGURE PCELL AND SCELL
AND PERFORM COMMUNICATION  S2101

RECEIVE INDICATION
ABOUT PCELL CHANGE  S2103

PERFORM PCELL CHANGE PROCEDURE  S2105

END

**FIG. 21**

START

DETERMINE PCELL CHANGE FROM
FIRST CELL TO SECOND CELL  S2201

IDENTIFY PCELL FUNCTION TO
BE TRANSFERRED TO SECOND CELL  S2203

PERFORM IDENTIFIED PCELL
FUNCTION IN SECOND CELL  S2205

END

**FIG. 22**

START

IDENTIFY STATE OF TARGET
CELL FOR PCELL CHANGE — S2301

PCELL CHANGE
TO TARGET CELL IS
POSSIBLE? — S2303 — YES

NO

PERFORM ADDITIONAL
OPERATION FOR PCELL CHANGE — S2305

PERFORM PCELL CHANGE PROCEDURE — S2307

END

**FIG. 23**

START

IDENTIFY TARGET CELL
CANDIDATE FOR PCELL CHANGE — S2401

APPLY INACTIVATION PREVENTION
CONFIGURATION TO IDENTIFIED CELL — S2403

END

**FIG. 24**

START

S2501

PERFORM COMMUNICATION IN FIRST
CELL, WHICH IS PCELL, AND IN
SECOND CELL THAT IS SCELL

S2503

RECEIVE INDICATION FOR
PCELL CHANGE TO SECOND CELL

S2505

SECOND CELL IN
INACTIVE STATE?

NO

S2509

PERFORM PROCEDURE
OF CHANGING PCELL
TO SECOND CELL

YES

S2507

CHANGE PCELL TO THIRD CELL OR
ANOTHER BWP OF THE SECOND CELL

END

## FIG. 25

## INTERNATIONAL SEARCH REPORT

| International application No. |
| --- |
| **PCT/KR2023/014834** |

**A.    CLASSIFICATION OF SUBJECT MATTER**

**H04W 36/06**(2009.01)i; **H04W 36/00**(2009.01)i; **H04W 72/23**(2023.01)i; **H04W 76/27**(2018.01)i; **H04W 76/28**(2018.01)i

According to International Patent Classification (IPC) or to both national classification and IPC

**B.    FIELDS SEARCHED**

Minimum documentation searched (classification system followed by classification symbols)

H04W 36/06(2009.01); H04W 24/02(2009.01); H04W 36/00(2009.01); H04W 36/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PCell(primary cell), SCell(secondary cell), switch, handover, inactivation, dormant, NES(network energy saving), BWP(bandwidth part), SSB(synchronization signal and broadcast channel block), random access, DRX(discontinuous reception)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2020-164177 A1 (NOKIA TECHNOLOGIES OY) 20 August 2020 (2020-08-20)<br>See paragraphs [0027]-[0028], [0070] and [0080]; and claims 1, 13, 20 and 45. | 12,14 |
| Y | | 1-7,10,13,15-16 |
| A | | 8-9,11 |
| Y | KR 10-2349611 B1 (SAMSUNG ELECTRONICS CO., LTD.) 11 January 2022 (2022-01-11)<br>See paragraphs [0155]-[0156]; and figure 23. | 1-7,10,13,15-16 |
| Y | VIVO. Discussion on frequency domain and UE-assisted Network Energy saving techniques. R2-2207787, 3GPP TSG-RAN WG2 Meeting #119 electronic, E-Meeting. 10 August 2022.<br>See section 2. | 2 |
| Y | QUALCOMM INCORPORATED. Information exchange over network interfaces for network energy savings. R3-225417, 3GPP TSG-RAN WG3 Meeting #117bis-e, E-Meeting. 28 September 2022.<br>See section 2.4. | 7 |

| ✓ | Further documents are listed in the continuation of Box C. | ✓ | See patent family annex. |
| --- | --- | --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 January 2024** | **04 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/014834**

### C.   DOCUMENTS CONSIDERED TO BE RELEVANT

| Category* | Citation of document, with indication, where appropriate, of the relevant passages | Relevant to claim No. |
|---|---|---|
| A | RAKUTEN MOBILE INC. Network Energy savings - UE grouping for efficient signaling. R2-2208297, 3GPP TSG-RAN WG2 Meeting #119-e, Electronic. 10 August 2022.<br> See section 2. | 1-16 |

Form PCT/ISA/210 (second sheet) (July 2022)

INTERNATIONAL SEARCH REPORT
Information on patent family members

International application No.

**PCT/KR2023/014834**

| Patent document cited in search report | | | Publication date (day/month/year) | Patent family member(s) | | | Publication date (day/month/year) |
|---|---|---|---|---|---|---|---|
| WO | 2020-164177 | A1 | 20 August 2020 | CN | 113455049 | A | 28 September 2021 |
| | | | | EP | 3925297 | A1 | 22 December 2021 |
| | | | | EP | 3925297 | A4 | 02 November 2022 |
| | | | | WO | 2020-164070 | A1 | 20 August 2020 |
| KR | 10-2349611 | B1 | 11 January 2022 | CN | 107079305 | A | 18 August 2017 |
| | | | | CN | 107079305 | B | 08 September 2020 |
| | | | | EP | 3206448 | A1 | 16 August 2017 |
| | | | | EP | 3206448 | B1 | 04 March 2020 |
| | | | | EP | 3681221 | A1 | 15 July 2020 |
| | | | | EP | 3681221 | B1 | 06 April 2022 |
| | | | | KR | 10-2016-0042793 | A | 20 April 2016 |
| | | | | US | 10129793 | B2 | 13 November 2018 |
| | | | | US | 11071018 | B2 | 20 July 2021 |
| | | | | US | 2017-0311206 | A1 | 26 October 2017 |
| | | | | US | 2019-0082355 | A1 | 14 March 2019 |
| | | | | US | 2021-0352532 | A1 | 11 November 2021 |
| | | | | WO | 2016-056869 | A1 | 14 April 2016 |

Form PCT/ISA/210 (patent family annex) (July 2022)